# FASCICULE DE BREVET EUROPEEN

(11) **EP 2 833 765 B1**
(45) Date de publication et mention de la délivrance du brevet: **27.04.2016**
(21) Numéro de dépôt: 13715287.2
(22) Date de dépôt: 08.03.2013
(51) Int. Cl.: A47J 31/36

(54) **DISPOSITIF DE PREPARATION DE BOISSON PAR INFUSION DE DOSETTE AVEC BERCEAU PIVOTANT**
VORRICHTUNG ZUR ZUBEREITUNG EINES GETRÄNKS MITTELS INFUSIONSKAPSEL MIT EINER SCHWENKWIEGE
DEVICE FOR PREPARING A BEVERAGE BY INFUSION POD WITH A PIVOTING CRADLE

(30) Priorité: 04.04.2012 FR 1253086
(43) Date de publication de la demande: 11.02.2015
(73) Titulaire: Technopool Sarl, 06340 La Trinite (FR)
(72) Inventeur: FERRIER, Christian, F-06340 Cantaron (FR)
(74) Mandataire: Domange, Maxime
(86) Numéro de dépôt international: PCT/FR2013/050494
(87) Numéro de publication internationale: WO 2013/150199

(56) Documents cités:
- EP-B1- 1 859 714
- WO-A1-2006/013124
- US-A- 5 755 149

## Description

La présente invention concerne un dispositif de préparation de boisson par infusion de dosette de poudre contenant des arômes à extraire à travers laquelle on injecte un liquide, de préférence de l'eau.

Plus particulièrement, la présente invention concerne un dispositif de ce type adapté pour une dosette présentant une forme de pastille plate ou ovoïde, ladite pastille étant entourée d'une collerette plate périphérique à circonférence essentiellement circulaire s'étendant dans un plan axial de section essentiellement circulaire de ladite dosette.

On entend par « plate » ou « ovoïde », que la dosette en section perpendiculaire au dit plan axial de section circulaire, présente deux faces symétriques avec une partie plate ou lenticulaire de part et d'autre dudit plan axial.

De façon connue, ladite dosette est constituée de 2 demi-enveloppes formant deux demi-coquilles réunies entre elles à leur périphérie pour former ladite collerette, ladite collerette prolongeant radialement ladite enveloppe et, de préférence, venant de matière radialement avec le reste de ladite enveloppe.

Plus particulièrement, la présente invention concerne un dispositif de préparation de boisson à partir de dosettes de poudre contenant des arômes, de préférence une poudre compactée, ladite dosette comprenant une enveloppe, de préférence en matériau souple poreux ou micro perforé, de préférence du type papier filtre, remplie de ladite poudre.

Ce type de dosette est essentiellement utilisé dans des machines à café traditionnelles porte-filtres dans lesquelles on place manuellement la dosette à plat, horizontalement, dans un porte dosette nécessitant de retirer manuellement la dosette après usage. Des dosettes et dispositifs de ce type sont notamment décrits dans FR 2 424 726.

On connait des machines semi-automatiques dans lesquelles l'éjection de la dosette se fait sans l'intervention manuelle de l'utilisateur du fait que, entre autre, la dosette est introduite dans la machine dans le sens vertical permettant son éjection par gravité.

Toutefois, dans les machines décrites dans l'art antérieur, notamment dans EP 1 859 714, il est nécessaire de mettre en oeuvre une dosette avec une collerette rigidifiée, notamment une collerette en carton, mais plus généralement une dosette dont l'enveloppe est relativement rigide nécessitant de percer ladite enveloppe pour pouvoir en extraire les arômes contenus à l'intérieur de la dosette par injection de liquide à travers la dosette.

Plus particulièrement, dans EP 1 859 714, le dispositif comprend :
- une première pièce formant piston, et
- une deuxième pièce comprenant à son extrémité un compartiment d'extraction et d'éjection ouvert en partie basse, adjacent à un compartiment d'insertion ouvert en partie supérieure, et apte à retenir la dosette par sa partie basse, et
- des moyens de déplacement en translation relative horizontale coaxiale desdites première et deuxième pièces, tels que ladite première pièce traverse une ouverture latérale sur la face avant du compartiment d'insertion et transfère la dosette dans le compartiment d'extraction et d'éjection adjacent. Pendant son transfert entre les deux compartiments, la dosette est retenue par des picots sur la surface du piston transperçant sa paroi d'enveloppe. Puis, une fois dans le compartiment d'extraction adjacent, la dosette est retenue par pinçage de sa collerette entre la première pièce et un rebord latéral périphérique du compartiment d'extraction et d'éjection constituant la face avant de la deuxième pièce. C'est le pinçage de la collerette qui assure l'étanchéité entre les deux première et deuxième pièces dans une chambre d'extraction confinant le compartiment d'extraction et d'éjection dans lequel on injecte le liquide à travers la dosette, dont la paroi a été percée par lesdits picots.

Le dispositif décrit dans EP 1 859 714 n'est cependant pas approprié pour la mise en oeuvre lorsque l'enveloppe et la collerette de la dosette sont réalisées en papier pour les raisons suivantes :
Dans le dispositif EP 1 859 714 il faut que la collerette présente une certaine flexibilité pour se plier lors du passage depuis le compartiment d'insertion vers le compartiment d'éjection, pour reprendre ensuite sa forme initiale droite verticale une fois dans le compartiment d'éjection, afin que la collerette puisse y être correctement pincée pour réaliser l'étanchéité de la chambre d'extraction comme décrit ci-dessus.

Il faut en outre que la collerette et la paroi de la dosette présentent une certaine résistance pour ne pas se déchirer et empêcher la chute de la dosette lorsque sa collerette est pincée, en dépit du poids de la dosette, lorsque celle-ci n'est pas retenue en partie basse comme c'est le cas dans le compartiment d'éjection.

Enfin, si la dosette n'est pas retenue par des éléments de perçage de sa paroi lors de son transfert entre les deux compartiments, elle n'est pas empêchée de chuter par gravité quand elle arrive dans le compartiment d'éjection avant le pinçage final de la collerette dans le compartiment d'éjection.

De telles propriétés mécaniques ne sont pas nécessairement satisfaites avec une collerette de papier poreux de faible grammage, tel que 12 à 50 g/m² comme c'est le cas dans les dosettes en papier perméable au liquide traditionnelles.

En pratique, EP 1 859 714 est spécialement adapté pour des dosettes à capsules rigides dont la paroi doit être percée d'une part et d'autre part dont la collerette au moins présente une certaine rigidité pour reprendre rapidement sa position après pliage, une fois la contrainte de pliage terminée, et pour supporter un pinçage sans entrainer de déchirure une fois dans le compartiment d'éjection.

Dans US 5 776 527, on décrit également un dispositif apte à recevoir une dosette verticalement et permettre son éjection semi-automatique par gravité sans intervention manuelle de l'utilisateur. Cependant, dans un tel cas, la dosette est maintenue verticale entre deux éléments formant des rainures. Ces éléments sont disposés latéralement de chaque côté de la dosette et légèrement inclinés de sorte qu'ils retiennent et soutiennent la collerette de la dosette. Et, par pivotement latéral des deux éléments autour d'un axe parallèle à l'axe longitudinal commun des deux pièces, il est possible de libérer et éjecter par gravité la dosette après extraction des arômes qu'elle contient. Toutefois, il y a lieu de mettre en oeuvre des moyens additionnels de pivotement des éléments de retenue de la dosette. En outre, dans US 5 776 527, là encore l'étanchéisation de la chambre d'extraction requiert le pinçage de la collerette sur toute sa périphérie. Ce dispositif requiert ainsi la mise en oeuvre d'une dosette avec au moins une collerette relativement rigide, à savoir en pratique une collerette en carton, en outre, le dispositif de US 5 767 527 ne comprenant pas d'éjecteur interne, la collerette peut rester collée dans le dispositif si le carton la constituant s'est ramolli de manière excessive, perturbant ainsi l'évacuation de la dosette.

On connait encore d'autres machines aptes à recevoir une dosette en position verticale appliquant des systèmes d'évacuation de la dosette par pivotement de son compartiment d'insertion tels que décrits dans EP 1 219 217.

Une telle machine est complexe et coûteuse à réaliser dans la mesure où les seuls moyens de translation mis en oeuvre pour la compression et le confinement de la dosette dans une chambre d'extraction sont insuffisants pour permettre l'éjection de la dosette après extraction, la mise en oeuvre de moyens d'oscillation additionnels étant requise.

Dans WO 2010/149468, on décrit un dispositif de préparation de boisson aromatisée, notamment à base d'arômes de café, apte à extraire des arômes par infusion d'une dosette de poudre en contenant, ladite dosette présentant une forme de pastille plate ou ovoïde, remplie de ladite poudre, ladite pastille étant entourée d'une collerette périphérique plate s'étendant dans un plan axial de ladite pastille, ledit dispositif comprenant :
- une première pièce mâle comprenant au moins une partie cylindrique formant un piston, et
- une deuxième pièce femelle comprenant un corps délimitant une chambre interne à paroi cylindrique de même axe longitudinal (XX') que ledit piston, ladite deuxième pièce femelle comprenant, en avant de ladite chambre cylindrique interne, un compartiment d'insertion formant un berceau apte à recevoir ladite dosette avec sa collerette en position parallèle au plan de l'ouverture avant de ladite chambre, et
- des premiers moyens de déplacement en rotation relative et translation relative horizontale coaxiale XX' desdites première pièce male et deuxième pièce femelle, l'ensemble de ladite deuxième pièce et dudit berceau étant initialement incliné vers le haut, avant de pivoter vers le bas puis être déplacé en translation relative par rapport à ladite première pièce mâle traversant l'ouverture latérale dudit berceau pour comprimer ladite dosette au fond de ladite chambre pour obtenir une position de fermeture étanche dans laquelle ladite partie cylindrique de ladite première pièce mâle est située à l'intérieur de ladite chambre interne, délimitant un compartiment étanche, dénommé chambre d'extraction, à l'intérieur de ladite chambre interne, dans laquelle ladite pastille est apte à être comprimée.

Ce dispositif requiert des moyens de pivotement de l'ensemble de la deuxième pièce femelle et dudit berceau.

D'autre part, dans WO 2010/149468, le fond du berceau de stockage de la dosette est partiellement évidé dans la partie supportant la partie basse de la collerette, et le berceau ne retient la collerette que localement en deux points, par des moyens de retenue 33 disposés symétriquement, et non pas sur sa périphérie inférieure. Il en résulte que, dans le dispositif selon WO 2010/149468, la dosette n'est pas toujours maintenue parfaitement en position coaxiale par rapport au cylindre et au piston, notamment lorsque la collerette de la dosette s'affaisse et/ou lorsque le diamètre de la collerette varie d'une dose à l'autre. En effet, dans ces deux cas, il peut y avoir un désaxage de la dosette par rapport à l'axe coaxial du piston et du cylindre.

Dans WO 2010/149468, le fond de la gorge du berceau soutient la bordure périphérique de la collerette sur sa demi-circonférence inférieure, ce qui ne permet pas d'éviter l'effondrement de la collerette dans son compartiment d'insertion, à cause de sa souplesse, et ne la maintient donc pas en position appropriée centrée par rapport à l'axe desdites première pièce mâle et deuxième pièce femelle, de sorte que la collerette pliée ne rentre pas bien dans son logement entre le piston et la chambre en position de fermeture.

Plus précisément, lorsque le diamètre de la collerette est Légèrement supérieur à celui prévu initialement dans la configuration du berceau, il se produit un léger désaxage de la dosette par rapport à l'axe du cylindre et du piston, de sorte que des coincements peuvent intervenir, soit initialement lors de la compression, soit lors de l'éjection.

Dans le brevet WO 210/149468, ce problème est accentué du fait que le berceau ne comporte pas un fond inférieur plein.

L'objet de la présente invention consiste en un dispositif amélioré plus simple, dans lequel la dosette est introduite verticalement et dans lequel l'opération d'éjection de la dosette ne requiert aucun autre moyen mécanique en mouvement que la mise en oeuvre de moyens de translation relative des deux pièces permettant la compression de la dosette dans une chambre d'extraction étanche.

Un autre objet de la présente invention est de fournir un dispositif de ce type qui soit particulièrement adapté pour être mis en oeuvre avec des dosettes dont la collerette et la paroi de l'enveloppe sont réalisées en matériau souple, poreux ou micro perforé, de faible grammage, notamment de 12 à 50 g/m² de préférence de type papier filtre.

Pour ce faire, la présente invention fournit un dispositif de préparation de boisson aromatisée, notamment à base d'arômes de café, apte à extraire des arômes par infusion d'une dosette de poudre en contenant, de préférence une poudre compactée, ladite dosette comprenant une enveloppe, de préférence en matériau souple poreux ou micro perforé, de préférence du type papier filtre, ladite dosette présentant une forme de pastille plate ou ovoïde, remplie de ladite poudre, ledit dispositif étant apte à extraire les arômes contenus dans ladite poudre lorsque ladite dosette est traversée par un liquide, de préférence de l'eau sous pression, dans une chambre d'extraction, ledit dispositif comprenant :
- une première pièce et une deuxième pièce de même axe longitudinal XX', et
- des moyens de déplacement en translation et/ou rotation relative horizontale coaxiale XX' desdites première pièce et deuxième pièce entre :
   - une position initiale d'ouverture ou éloignement maximal en translation et/ou rotation des deux première et deuxième pièces entre lesquelles se trouve une troisième pièce délimitant un compartiment d'insertion initial apte à recevoir ladite dosette, celle-ci pouvant être insérée par gravité dans ledit compartiment d'insertion ouvert en partie supérieure,
   - une position de fermeture ou rapprochement maximal en translation et/ou rotation relative des deux première et deuxième pièces dans laquelle lesdites première et deuxième pièces délimitent un compartiment étanche, dénommé chambre d'extraction, à l'intérieur laquelle ladite pastille est apte à être comprimée pour réaliser une dite extraction, ladite troisième pièce comprenant un orifice, de préférence en partie au moins circulaire, apte à être traversée par l'une au moins des deux première et deuxième pièces, et
   - une position finale d'ouverture ou éloignement maximal en translation et/ou rotation des deux première et deuxième pièces entre lesquelles ladite troisième pièce délimite un compartiment d'évacuation apte à recevoir ladite dosette après ladite extraction, ladite dosette pouvant être évacuée par gravité en dehors dudit compartiment d'éjection ouvert en partie inférieure,
caractérisé en ce que ladite troisième pièce est montée en pivotement par rapport à un axe transversal YY' perpendiculaire au dit axe longitudinal XX', apte à pivoter de manière synchronisée avec une dite translation et/ou rotation relative des deux première et deuxième pièces, tel que :
- le plan dudit orifice est en position verticale et traversé par une dite première ou deuxième pièce lorsque lesdites première et deuxième pièces sont en dite position de fermeture, et
- le plan dudit orifice est en position d'inclinaison maximale, de préférence d'un angle α de 10 à 30°, par rapport à un plan vertical transversal perpendiculaire audit axe longitudinal XX' lorsque lesdites première et deuxième pièces sont en dites position d'ouverture initiale ou finale, et
- ladite troisième pièce présente une forme de berceau telle qu'en position inclinée, en dites positions d'ouverture initiale et finale, elle forme :
   - un dit compartiment d'insertion avec la face avant d'une dite première pièce ou dite deuxième pièce, et respectivement
   - un dit compartiment d'évacuation avec la face avant d'une dite deuxième pièce ou respectivement dite première pièce, et
- ledit orifice de ladite troisième pièce comprend une surface périphérique avant, apte à soutenir au moins dans sa partie inférieure la partie périphérique bombée de la pastille remplie de poudre de ladite dosette en position inclinée dans ledit compartiment d'insertion, l'autre face de la dosette en périphérie bombée de la partie pleine en forme de pastille de ladite dosette en position inclinée dans ledit compartiment d'insertion étant en appui contre une partie inférieure de la face avant d'une dite première ou, respectivement, deuxième pièce.

Selon la présente invention, ladite troisième pièce ne constitue pas à elle seule un dit compartiment d'insertion, comme dans la technique antérieure. Mais, c'est la coopération de ladite troisième pièce et de la face avant de ladite première ou deuxième pièce qui forme un dit compartiment d'insertion. D'autre part, la partie inférieure de ladite troisième pièce ne retient pas la dosette le cas échéant au niveau du bord périphérique de sa collerette mais en sous-face de sa partie remplie de poudre en forme de pastille, ce qui garantit une meilleure coaxialité de la dosette dans la mesure où ladite pastille est de dimension plus constante et plus rigide que ladite collerette.

On entend ici par en «avant» ou «arrière» de la première pièce et éventuellement des éléments qui lui sont solidaires tels que ledit berceau, des positions relatives dans la direction longitudinale axiale XX', «avant» étant plus proche de la deuxième pièce femelle et «arrière» plus éloigné de la deuxième pièce femelle, la face avant de la première pièce mâle étant la plus en avant.

Inversement, on entend par en «avant» ou «arrière» de la deuxième pièce femelle (et éventuellement des éléments qui lui sont solidaires tels que ledit berceau) des positions relatives dans la direction longitudinale axiale XX', «avant» étant plus proche de la première pièce mâle et «arrière» plus éloigné de la première pièce mâle, le compartiment d'insertion étant situé à l'avant de ladite deuxième pièce femelle.

Plus particulièrement selon la présente invention, ladite troisième pièce présente une inclinaison identique dans la position d'insertion de la dosette et la position d'éjection de la dosette, et la rotation de ladite troisième pièce se fait automatiquement concomitamment au déplacement relatif en translation desdites première et deuxième pièces.

Plus particulièrement encore, la rotation de ladite troisième pièce comprend une étape de rotation entre la position inclinée en dite position initiale d'insertion et une position verticale dans laquelle l'orifice de ladite troisième pièce est traversé par ladite première ou deuxième pièce après avoir été traversé par ladite partie pleine en forme de pastille de ladite dosette.

On comprend que ledit compartiment d'insertion présente dans sa partie supérieure, une ouverture de largeur supérieure à la largeur de la dosette pour permettre l'insertion de la dosette dans ledit compartiment d'insertion. Et, le compartiment d'évacuation présente dans sa partie inférieure, une ouverture de largeur supérieure à la largeur de la dosette pour permettre l'évacuation de la dosette dans ledit compartiment d'évacuation

Ladite troisième pièce peut être montée sur un châssis commun supportant les trois pièces ou être solidaire d'une des deux première et deuxième pièces.

De préférence, pour l'infusion d'une dite dosette comprenant une dite pastille entourée d'une collerette plate périphérique s'étendant dans un plan axial de ladite pastille et apte à se plier par rapport au dit plan axial, ladite dosette présentant de préférence une section essentiellement circulaire dans ledit plan axial, le dispositif selon l'invention est caractérisé en ce que ladite collerette est insérée entre la partie inférieure de ladite troisième pièce et la partie inférieure de la face avant de ladite première pièce ou respectivement deuxième pièce la plus proche formant ledit compartiment d'insertion.

On comprend que ledit compartiment d'insertion présente dans sa partie inférieure, une ouverture inférieure moins large dans ladite direction longitudinale axiale XX' que la largeur de ladite pastille dans laquelle ladite collerette est insérée sans être pliée de manière à ce que la dosette reste dans ledit compartiment d'insertion, en dite position inclinée du berceau.

Dans un mode préféré de réalisation, ledit dispositif comporte :
a- une dite première pièce mâle comprenant au moins une partie cylindrique formant un piston, et
b- une dite deuxième pièce femelle comprenant un corps délimitant une chambre interne à paroi cylindrique de même axe longitudinal XX' que ledit piston, et
c- une dite troisième pièce montée à pivotement sur un châssis commun supportant les trois pièces ou solidaire d'une, au moins, des deux première et deuxième pièces, et
d- des moyens de déplacement en translation relative horizontale coaxiale XX' desdites première pièce male et deuxième pièce femelle aptes à permettre une dite translation entre :
   i- une dite position de fermeture étanche dans laquelle ladite partie cylindrique de ladite première pièce mâle est située à l'intérieur de ladite chambre interne, délimitant un compartiment étanche, dénommé chambre d'extraction, à l'intérieur de ladite chambre interne, l'orifice de ladite troisième pièce en dite position verticale étant traversée par au moins ladite première pièce en dite position de fermeture, et
   ii- une dite position d'ouverture maximale dans laquelle :
      - la face avant de ladite première pièce male est écartée au maximum d'une surface avant de l'ouverture de ladite chambre de ladite première femelle, et
      - ladite troisième pièce en position inclinée forme un berceau dont ledit orifice est délimité sur sa face supérieure, par une surface avant, de préférence une surface tronconique avant au moins dans sa partie inférieure, ladite surface avant dudit berceau délimitant un dit compartiment d'insertion avec la face avant de ladité première mâle, ledit orifice étant délimité sur sa face inférieure par une surface arrière dudit berceau, de préférence une surface arrière plane dudit berceau, délimitant un dit compartiment d'éjection avec la surface avant de l'ouverture de ladite chambre de ladite première femelle, et
      - ladite surface avant dudit berceau au moins dans sa partie inférieure est apte à soutenir une face de la dosette en sous face de la périphérie bombée de la partie pleine en forme de pastille de ladite dosette lorsque celle-ci est insérée dans ledit compartiment d'insertion, l'autre face de la dosette en périphérie bombée de la partie pleine en forme de pastille de ladite dosette étant en appui contre la face avant de la première pièce male lorsque ladite dosette est insérée dans ledit compartiment d'insertion, ladite collerette de la dosette étant apte à être insérée dans un espace formant une fente entre la partie inférieure de la face avant dudit berceau et la partie inférieure de la face avant de ladite première pièce male lorsque ladite dosette est insérée dans ledit compartiment d'insertion.

On comprend que :
- ledit compartiment d'insertion présente-dans sa partie inférieure, une ouverture inférieure entre la partie inférieure du berceau et la partie inférieure de la face avant de la première pièce male, moins large dans ladite direction longitudinale axiale XX' que la largeur de ladite pastille dans laquelle ladite collerette est insérée sans être pliée de manière à ce que la dosette reste dans ledit compartiment d'insertion, en dite position inclinée du berceau, et
- le diamètre dudit orifice dudit berceau est plus grand que celui de ladite première pièce mâle pour que celle-ci puisse le traverser en dite position de fermeture.

On comprend aussi que du fait que ladite dosette est soutenue en sous face de la périphérie bombée de la partie pleine en forme de pastille de ladite dosette sur ses deux faces lorsque celle-ci est insérée dans ledit compartiment d'insertion, la partie inférieure dudit berceau eh position inclinée arrive à une hauteur sensiblement au même niveau que la partie inférieure de la face avant de la première pièce male et donc en vis-à-vis de l'ouverture avant de ladite chambre lorsque ladite dosette est insérée dans ledit compartiment d'insertion ; et par rotation en position verticale la partie inférieure du berceau est dégagée dessous ledit piston et dessous la limite de l'ouverture avant de ladite chambre.

De préférence, lesdites surfaces avant dudit berceau et de l'ouverture de ladite chambre sont des surfaces de révolution non cylindriques.

Plus particulièrement encore, ledit dispositif comporte :
a- une dite première pièce mâle fixe, et
b- une dite deuxième pièce femelle apte à être déplacée en translation, et
c- une dite troisième pièce montée à pivotement sur ladite deuxième pièces femelle, ladite ouverture de ladite chambre étant dessous et en avant de l'axe Y1Y1 de pivotement de ladite troisième pièce, ledit orifice de ladite troisième pièce étant apte à être traversé ladite première pièce mâle et située en avant de ladite deuxième pièce en dite position de fermeture.

Plus particulièrement encore, ledit berceau forme un anneau dont l'orifice oblongue comporte en partie supérieure une demie circonférence supérieure semi circulaire comportant une dite surface avant apte à soutenir continument la partie supérieure de ladite collerette et ledit orifice comporte en partie inférieure une demie circonférence inférieure semi circulaire comportant une dite surface avant apte à soutenir continument la sous face de ladite pastille pleine sur une de ses faces lorsque ledit berceau est en position inclinée en avant de l'ouverture de ladite chambre interne, ledit orifice étant bordé sur une partie de sa hauteur par deux rebords latéraux aptes à border latéralement ladite collerette et la maintenir coaxialement au dit axe longitudinale XX', les deux parties supérieure et inférieure semi circulaires étant reliées entre elles par des partie rectilignes verticales au niveau desdits rebords latéraux.

On comprend que ces deux parties rectilignes verticales au niveau desdits rebords latéraux reliant entre elles les deux parties supérieure et inférieure semi circulaire dudit orifice permette d'assurer le dégagement en dessous dudit piston et de l'ouverture de ladite chambre lorsque ledit berceau est en position verticale.

Plus particulièrement encore, ladite face avant de la première pièce mâle comporte :
- une surface de révolution périphérique non cylindrique de même dit axe longitudinal XX', de préférence une surface tronconique, et
- une surface centrale à circonférence circulaire de même dit axe longitudinal XX', de préférence une surface plane verticale, recouverte d'une première plaque perforée, et
- une surface de révolution intermédiaire de même dit axe longitudinal XX' entourant ladite surface centrale, de préférence une surface tronconique, ladite surface de révolution intermédiaire présentant un diamètre croissant depuis ladite surface centrale jusqu'à ladite surface de révolution périphérique, ladite surface de révolution périphérique étant de diamètre décroissant depuis sa circonférence maximale à son extrémité arrière la plus proche de la paroi cylindrique de ladite chambre interne en dite position de fermeture, jusqu'à son extrémité avant constituant l'extrémité avant de ladite face avant de la première pièce mâle, et
- en dite position de fermeture, ladite face avant de la première pièce mâle délimite avec la paroi interne cylindrique de ladite chambre interne, un logement périphérique apte à contenir la collerette pliée par rapport au plan axial vertical perpendiculaire dudit axe longitudinal XX' de ladite pastille, lorsque ladite pastille est dans ladite chambre d'extraction.

On comprend que ladite collerette est pliée sensiblement à 90° par rapport à un plan axial de ladite pastille perpendiculaire à la direction longitudinale XX' du dispositif lorsque la dosette est logée dans ladite chambre d'extraction.

D'autre part, ladite collerette peut se prolonger localement par une extension radiale formant une languette, auquel cas ledit logement est apte à contenir ladite languette.

On comprend également que ladite collerette présente une dite section principalement circulaire dans un plan axial vertical perpendiculaire à ladite direction longitudinale axiale XX' lorsque ladite collerette est en position dans ledit compartiment d'insertion en dite position d'ouverture et d'insertion.

Le dispositif selon la présente invention est avantageux en ce que la collerette de la dosette ne subit aucune autre contrainte que son pliage sans qu'il ne soit nécessaire qu'elle ne reprenne sa forme droite verticale et sans que la collerette ne soit pincée, la collerette ne participant pas à l'étanchéité de la chambre d'extraction.

Le dispositif selon la présente invention est donc avantageux en ce qu'il permet de mettre en oeuvre une dosette ordinaire comprenant une enveloppe en matériau souple poreux ou micro perforé, et donc relativement fragile une fois mouillée, de préférence du type papier filtre, sans qu'il soit requis que la collerette ne soit en carton renforcé.

Plus particulièrement, le bord périphérique souple de la collerette de la dosette se plie à 90° lors de son introduction dans la chambre d'extraction par translation relative des deux première et deuxième pièces comme cela est explicité ci-après, et à l'intérieur de son logement.

On entend par «plate ou ovoïde» que la dosette présente deux faces symétriques avec une partie plate ou lenticulaire de part de d'autre de son plan diamétral, lequel est aussi le plan de la collerette.

Plus particulièrement, la dosette est constituée de deux demi-enveloppes formant deux demi-coquilles réunies entre elles à leur périphérie, notamment collées l'une contre l'autre, pour former ladite collerette, ladite collerette prolongeant radialement ladite enveloppe et, de préférence, venant de matière avec le reste de ladite enveloppe.

Le diamètre externe de ladite première pièce mâle est légèrement inférieur au diamètre interne de ladite chambre cylindrique, et donc de l'orifice dudit berceau.

Ledit berceau est ouvert latéralement sur ses deux faces, ses dites ouvertures latérales étant de diamètre supérieur ou égal à celui de ladite chambre cylindrique et dudit piston pour que ladite première pièce mâle puisse les traverser.

Le diamètre interne de la chambre cylindrique est légèrement supérieur à celui de la partie pleine de poudre en forme de pastille de la dosette, et inférieur au diamètre maximal de la collerette, de sorte qu'en cas de translation relative de la première pièce depuis ladite position d'ouverture vers ladite position de fermeture, ladite collerette se plie et vient in fine (en position de fermeture) se loger dans ledit logement de la collerette pliée.

On comprend que :
- la surface centrale et la surface de révolution intermédiaire constituent des surfaces d'appui contre la partie pleine de la dosette, ladite surface centrale de la face externe étant en appui contre la partie centrale de la face latérale avant de ladite dosette et ladite surface intermédiaire de révolution étant une surface d'appui de la partie périphérique bombée de ladite partie pleine en forme de pastille de la dosette, lorsque ladite dosette est comprimée dans ladite chambre d'extraction en dite position de fermeture, et
- ladite surface centrale d'appui de la face externe de ladite première pièce est donc en retrait-dans la direction longitudinale axiale XX' par rapport à l'extrémité avant de la face avant externe de la première pièce mâle, et
- lesdites surface de révolution intermédiaire et surface de révolution périphérique tronconiques forment une extrémité avant de ladite face externe en pointe par rapport à ladite surface centrale en retrait, et
- ladite « extrémité avant en pointe » de ladite face avant de ladite première pièce mâle présente une section transversale circulaire, la section transversale s'entendant d'une section dans la direction perpendiculaire à ladite direction axiale longitudinale XX', et
- les perforations de la première plaque perforée permettent le passage du liquide sous pression chargé d'arômes après avoir traversé la dosette dans la chambre d'extraction, puis l'évacuation du liquide par un conduit d'évacuation,
- le logement de la collerette pliée est de forme triangulaire en section dans un plan axial longitudinal du dispositif lorsque la surface de révolution périphérique est tronconique.

La forme tronconique de la surface de révolution intermédiaire de ladite face externe est particulièrement avantageuse pour décoller et dégager la dosette de la surface centrale d'appui de la face externe, et permettre l'éjection par gravité de ladite dosette lorsque l'on retourne à une position d'ouverture depuis une position de fermeture, comme explicité ci-après. En effet, cette surface tronconique limite la surface de contact avec la partie périphérique bombée de la pastille de la dosette une fois en dite position d'ouverture et d'évacuation.

Plus particulièrement encore, ladite première pièce mâle comprend :
- une partie arrière creuse présentant une surface externe périphérique cylindrique, et
- une partie avant contenue en partie dans le creux de ladite partie arrière, ladite partie avant comprenant une dite face avant externe non contenue dans ledit creux de ladite partie arrière, et
- ladite partie arrière étant reliée et/ou apte à coopérer avec ladite partie avant, par un premier élément élastique, de préférence un premier ressort, et
- un joint torique déformable intercalé entre ladite partie arrière et ladite face avant de ladite partie avant, réalisant l'étanchéité de ladite chambre d'extraction lorsqu'on réalise une compression longitudinale contre ladite face avant de la première pièce mâle par translation relative desdites première pièce mâle et deuxième pièce femelle en dite position de fermeture.

Ce positionnement dudit joint est avantageux en ce que celui-ci n'a pas ou peu de contact ou frottement avec la pièce femelle pendant les phases d'ouverture ou de fermeture.

On comprend que :
- la compression longitudinale exerce une poussée de l'avant vers l'arrière de la première pièce mâle, et
- l'étanchéité est assurée par l'augmentation de plus grand diamètre du joint produit par déformation radiale provocant une ovalisation du joint, et
- l'étanchéité de la chambre d'extraction se réalise entre (i) la surface de la paroi cylindrique de la chambre interne de la deuxième pièce femelle et (ii) le joint délimitant (a) la surface cylindrique de la partie cylindrique de la partie avant et (b) ladite face de la première pièce mâle, plus particulièrement ladite surface périphérique de révolution de ladite face externe, mais
- en revanche, en l'absence de compression, le diamètre périphérique dudit joint autorise ladite translation relative desdites première pièce mâle et deuxième pièce femelle.

Ledit premier ressort est particulièrement avantageux pour permettre la déformation en dilatation dudit joint pour qu'il reprenne sa forme initiale.

Plus particulièrement encore, la deuxième pièce femelle comprend une deuxième plaque verticale, de préférence perforée, au sein de ladite chambre interne à paroi cylindrique, d'un diamètre ajusté au diamètre interne d'un renfoncement ou logement creux au fond de ladite chambre interne, ladite deuxième plaque étant apte à se déplacer en translation relative longitudinale par rapport à ladite chambre interne, entre :
i- le fond de la chambre interne, et
ii- une position d'évacuation à l'extérieur de ladite chambre interne, de préférence juste au niveau de l'ouverture de ladite chambre, et
la translation relative de ladite deuxième plaque est apte à se synchroniser avec lesdits moyens de translation relative desdites première pièce mâle et deuxième pièce femelle de telle sorte que :
i'- ladite deuxième plaque puisse être positionnée en arrière dudit compartiment d'insertion, dans une première position d'ouverture constituant une position initiale d'insertion, puis être déplacée vers le fond de ladite chambre pendant une translation relative de rapprochement de ladite deuxième pièce femelle par rapport à ladite première pièce mâle depuis ladite position d'ouverture et d'insertion jusqu'à une dite position de fermeture, et
ii'- ladite deuxième plaque puisse être déplacée depuis le fond de ladite chambre vers l'extérieure de ladite chambre, de préférence au niveau de l'ouverture avant de ladite chambre après translation relative d'éloignement de ladite deuxième pièce femelle par rapport à ladite première pièce mâle depuis ladite position de fermeture jusqu'à une dite position d'ouverture et d'évacuation.

Ladite deuxième plaque remplie une fonction de soutien de la dosette sur sa face latérale arrière à l'intérieur de ladite chambre interne et peut permettre également l'évacuation de la dosette lorsque ladite deuxième plaque est positionnée de manière à ce que la dosette soit à l'extérieur de la deuxième pièce femelle.

On comprend que les perforations de ladite deuxième plaque perforée permettent le passage du liquide sous pression à travers ladite dosette dans ladite chambre d'extraction, de préférence alimentées par un conduit d'alimentation débouchant dans ladite chambre interne, de préférence au fond de ladite chambre interne.

On comprend que par «rapprochement» ou «éloignement» des deux première pièce mâle et deuxième pièce femelle, on entend le cas échéant un «rapprochement» ou «éloignement» de la face avant de ladite première pièce mâle par rapport au fond de ladite chambre cylindrique.

Plus particulièrement encore, ladite deuxième pièce femelle comprend en outre un élément de soutien et d'éjection comprenant une dite deuxième plaque reliée à l'avant d'une tige traversant le fond de la chambre cylindrique, ladite tige et ladite deuxième plaque étant apte à être bloquer en translation lorsque ladite deuxième pièce femelle est déplacée en translation inverse depuis une dite position de fermeture vers une dite position d'ouverture et d'éjection du fait que l'extrémité arrière de ladite tige à l'extérieure à l'arrière de ladite pièce femelle est bloquée une butée disposée derrière ladite deuxième pièce femelle.

Plus particulièrement encore, lesdits moyens de translation relative sont aptes à déplacer ladite deuxième pièce femelle mobile par rapport à une dite première pièce mâle fixe, ladite première pièce mâle étant fixée à un châssis, ledit châssis assurant le guidage en translation relative longitudinale coaxiale de la deuxième pièce femelle mobile par rapport à la ladite première pièce mâle fixe et le guidage en translation et rotation relative de ladite troisième pièce.

Plus particulièrement, ladite troisième pièce est guidée en rotation par des éléments de guidage solidaires de ladite troisième pièce et déplacée le long d'éléments de guidage complémentaires formant un chemin de guidage tel qu'un chemin rainuré non entièrement horizontal c'est-à-dire comportant au moins une partie qui ne s'étend pas dans la direction horizontale axiale de translation relative desdites première et deuxième pièces, lesdits éléments de guidage complémentaires étant solidaires dudit châssis et permettant de guider et de contrôler le pivotement de ladite troisième pièce lorsqu'on déplace en translation relative lesdites première et deuxième pièces.

Plus particulièrement encore, lesdits moyens de translation relative comprennent un système de biellettes actionnables manuellement par un levier ou de façon motorisée de préférence par un vérin, ledit système de biellettes assurant la liaison cinématique en translation de ladite deuxième pièce femelle par rapport à ladite première pièce mâle.

On comprend que lesdits moyens de translation assurent la liaison cinématique en translation entre ladite deuxième pièce femelle et ledit châssis.

Plus particulièrement encore, lorsque les moyens de translation relative comprennent un levier situé par-dessus ladite deuxième pièce femelle et un système de biellettes, un système de courroies et poulies ou engrenages assure la transmission du mouvement de rotation du levier au système de biellettes.

La présente invention fournit également, un procédé d'utilisation d'un dispositif selon l'invention, caractérisé en ce qu'on réalise les étapes successives suivantes :
1- on insère par gravité une dite dosette en position inclinée dans un dit compartiment d'insertion, lesdites première pièce mâle et deuxième pièce femelle étant en dite position d'ouverture et d'insertion, une face de la dosette en périphérie bombée de la partie pleine en forme de pastille de ladite dosette étant en appui sur la partie inférieure de la surface avant de ladite troisième pièce, l'autre face de la dosette en périphérie bombée de la partie pleine en forme de pastille de ladite dosette étant en appui contre une partie inférieure de la face avant d'une dite première ou deuxième pièce, puis
2- on réalise une rotation et/ou translation relative de rapprochement des deux dites première pièce mâle et deuxième pièce femelle et une rotation puis translation de ladite troisième pièce, depuis ladite position d'insertion jusqu'à une dite position de fermeture étanche dans laquelle l'orifice de ladite troisième pièce en dite position verticale est traversée par l'une au moins des dites première et deuxième pièces, et ladite dosette se trouve comprimé dans une dite chambre d'extraction étanche, puis
3- on réalise une injection de liquide à travers ladite dosette et évacuation dudit liquide de ladite chambre d'extraction, et
4- on réalise une translation et/ou rotation relative d'éloignement des deux dites première pièce mâle et deuxième pièce femelle à partir de ladite position de fermeture jusqu'à une dite position d'ouverture et d'évacuation, ladite troisième pièce en position verticale étant déplacée en translation puis en rotation en dite position inclinée, ladite dosette étant déplacée dans un dit compartiment d'évacuation dans lequel la dosette est évacuée par gravité.

Plus particulièrement, pour l'infusion d'une dite dosette comprenant une dite pastille entourée d'une collerette plate périphérique s'étendant dans un plan axial de ladite pastille et apte à se plier par rapport au dit plan axial, le procédé selon l'invention est caractérisé en ce qu'on réalise les étapes successives suivantes :
1- on insère par gravité une dite dosette avec sa collerette en position inclinée dans un dit compartiment d'insertion, lesdites première pièce mâle et deuxième pièce femelle étant en dite position d'ouverture et d'insertion, une face de la dosette en périphérie bombée de la partie pleine en forme de pastille de ladite dosette étant en appui sur la partie inférieure de la surface avant de ladite troisième pièce, l'autre face de la dosette en périphérie bombée de la partie pleine en forme de pastille de ladite dosette étant en appui contre une partie inférieure de la face avant de la première pièce male, ladite collerette de la dosette étant insérée dans un espace formant une fente entre la partie inférieure de la face avant de ladite troisième pièce et la partie inférieure de la face avant de ladite première pièce male lorsque ladite dosette est insérée dans ledit compartiment d'insertion, puis
2- on réalise une translation relative de rapprochement des deux dites première pièce mâle et deuxième pièce femelle et une rotation puis translation de ladite troisième pièce, depuis ladite position d'insertion jusqu'à une dite position de fermeture étanche dans laquelle l'orifice de ladite troisième pièce en dite position verticale est traversé par au moins ladite première pièce, et de préférence traversé par ladite partie pleine en forme de pastille de ladite dosette et par ladite première pièce, et ladite dosette se trouve plaquée et comprimée dans une dite chambre d'extraction étanche entre la face avant de la première pièce mâle et le fond de ladite chambre, puis
3- on réalise une injection de liquide à travers ladite dosette et évacuation de ladite chambre d'extraction, et
4- on réalise une translation relative d'éloignement des deux dites première pièce mâle et deuxième pièce femelle à partir de ladite position de fermeture jusqu'à une dite position d'ouverture et d'évacuation, ladite troisième pièce en position verticale étant déplacée en translation vers l'ouverture avant de la chambre , puis en rotation en dite position inclinée, ladite dosette étant déplacée depuis le fond de ladite chambre vers l'ouverture avant de ladite chambre dans un dit compartiment d'évacuation dans lequel la dosette est évacuée par gravité.

D'autres caractéristiques et avantages de la présente invention apparaîtront à la lumière de la description détaillée qui va suivre, faite de manière illustrative et non limitative en référence aux dessins annexés sur lesquels :
La figure 1 représente une vue en perspective d'un dispositif selon l'invention 1 disposé à l'intérieur d'un châssis 1-3, assurant le maintien et le guidage en translation relative d'une première pièce mâle ou piston 1-1 et d'une deuxième pièce femelle 1-2 comprenant une chambre cylindrique 5.
La figure 1A est une vue en perspective d'un dispositif selon l'invention de la figure 1, sans le châssis 1-3 et avec un vérin 9-2 d'actionnement des moyens de déplacement en translation relative 9 desdites première pièce mâle 1-1 et deuxième pièce femelle 1-2.
La figure 1B est une vue de coté en coupe longitudinale verticale du dispositif de la figure 1A, en position initiale d'ouverture avant insertion de la dosette 20 dans un compartiment d'insertion 6 délimité par, d'un coté, la face avant du piston 1-1 en vis-à-vis d'une face 20a de la dosette 20 et, de l'autre coté, du berceau 4 en position inclinée en vis-à-vis de la face opposé 20b de la dosette.
La figure 2 est une vue en coupe longitudinale et en perspective d'un dispositif selon l'invention, comprenant un levier 9-1 pour actionner manuellement les moyens de déplacement en translation relative 9 desdites première pièce mâle 1-1 et deuxième pièce femelle 1-2, la dosette étant insérée dans ledit compartiment d'insertion 6 en position initiale d'ouverture.
La figure 2A représente le détail A de la figure 2 montrant la partie inférieure 24 périphérique bombée de la partie pleine ou pastille 21 de la dosette 20 en appui sur des surfaces tronconiques de révolution 2-1 et 4a de la face avant 2 du piston 1-1 et, respectivement, du berceau 4 dans sa partie inférieure 4-1.
La figure 3 représente une vue en perspective du seul piston 1-1.
La figure 4 est une vue en perspective de la deuxième pièce femelle 1-2 équipée d'un berceau 4 qui lui est fixé par une articulation en rotation le long d'un axe transversal Y₁Y₁ perpendiculaire à l'axe longitudinal XX desdites première pièce mâle 1-1 et deuxième pièce femelle 1-2.
La figure 5 est une vue en perspective du seul berceau 4.
Les figures 6A à 6F représentent en perspective et en coupe médiane longitudinale verticale, des vues partielles des deux première pièce mâle 1-1 et deuxième pièce femelle 1-2 dans différentes positions relatives.
Les figures 7A à 7F représentent également des vues schématiques de coté, en coupe longitudinale médiane des deux première pièce mâle 1-1 et deuxième pièce femelle 1-2 dans différentes positions relatives, depuis une dite position d'ouverture dans laquelle la dosette est en position initiale inclinée d'insertion jusqu'à une position d'évacuation de la dosette 20 depuis un compartiment d'éjection 7 délimité par la face avant 5-1 de la chambre cylindrique 5 de la pièce femelle 1-2 et la face arrière du berceau 4 incliné.
La figure 8 est une vue en coupe longitudinale médiane en perspective d'un dispositif selon l'invention équipé d'un levier 9-1, dans lequel la dosette est en position de compression dans un compartiment étanche, étanchéisé par un joint torique 3 ovalisé, délimité par les faces avant du piston 1-1 et le fond de la chambre cylindrique 5.
La figure 8A représente le détail A de la figure 8, montrant la collerette 22 en position pliée dans un logement périphérique 2a dudit compartiment étanche.

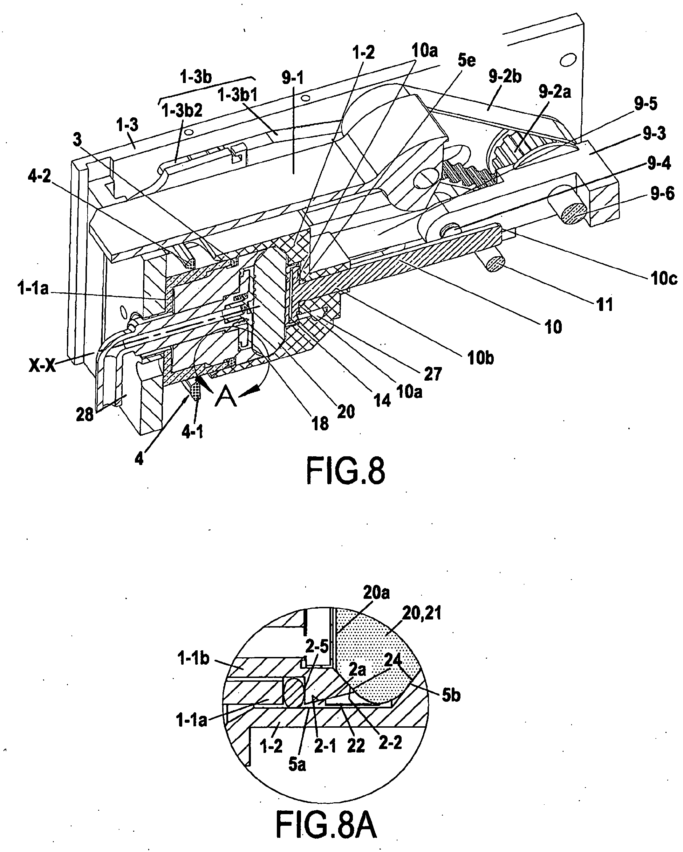

La figure 8A est une représentation schématique exagérée du détail a de la figure 8 dans laquelle l'angle entre la surface tronconique périphérique 2-1 et la paroi cylindrique 5a a été accentué pour mieux visualiser le logement 2a recevant la collerette pliée 22.

Le terme "berceau" est ici employé pour signifier que la pièce concernée est une pièce de soutien de forme incurvée.

Les termes "avant" et "arrière" en liaison avec les différentes pièces ont été définis précédemment.

Pour le berceau, la face avant est la face en vis-à-vis du piston et la face arrière est la face en vis-à-vis de l'ouverture 5-1 de la chambre 5.

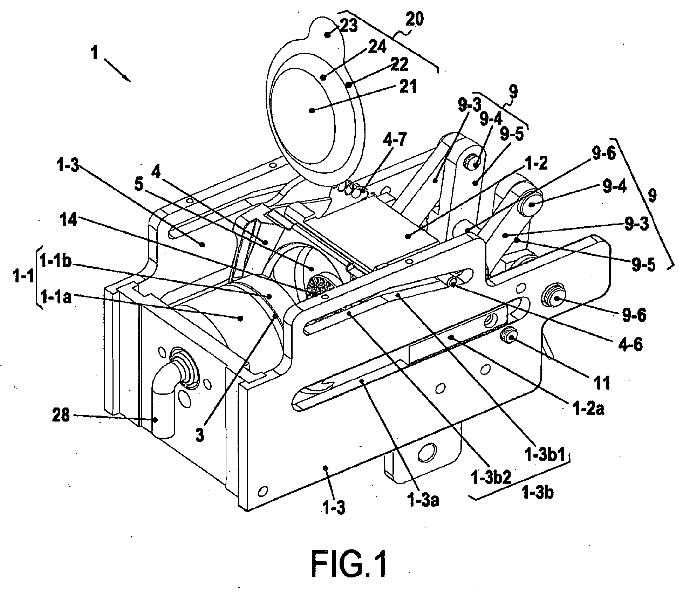

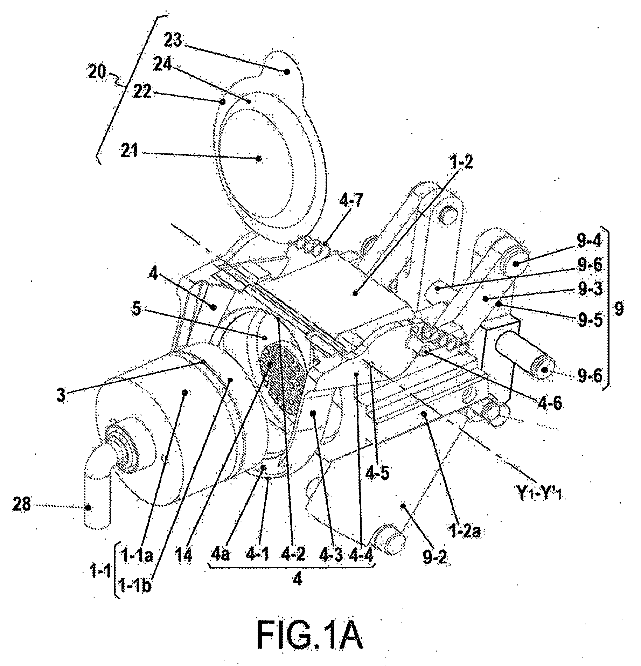

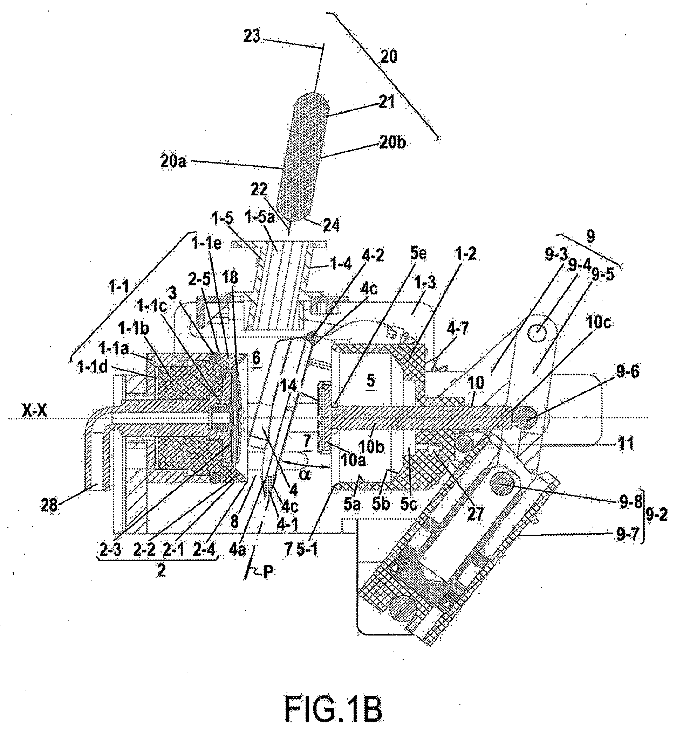

Sur la figure 1 est représenté un dispositif selon l'invention 1 comprenant une première pièce mâle 1-1 fixe à l'intérieur d'un châssis 1-3. Le châssis 1-3 comporte des ouvertures longitudinales horizontales 1-3a sur ses parois latérales servant à guider en translation longitudinale axiale la pièce femelle mobile 1-2, ladite pièce femelle mobile 1-2 comportant des éléments externes de guidage 1-2a aptes à coulisser à l'intérieur des ouvertures longitudinales horizontales latérales 1-3a dudit châssis 1-3.

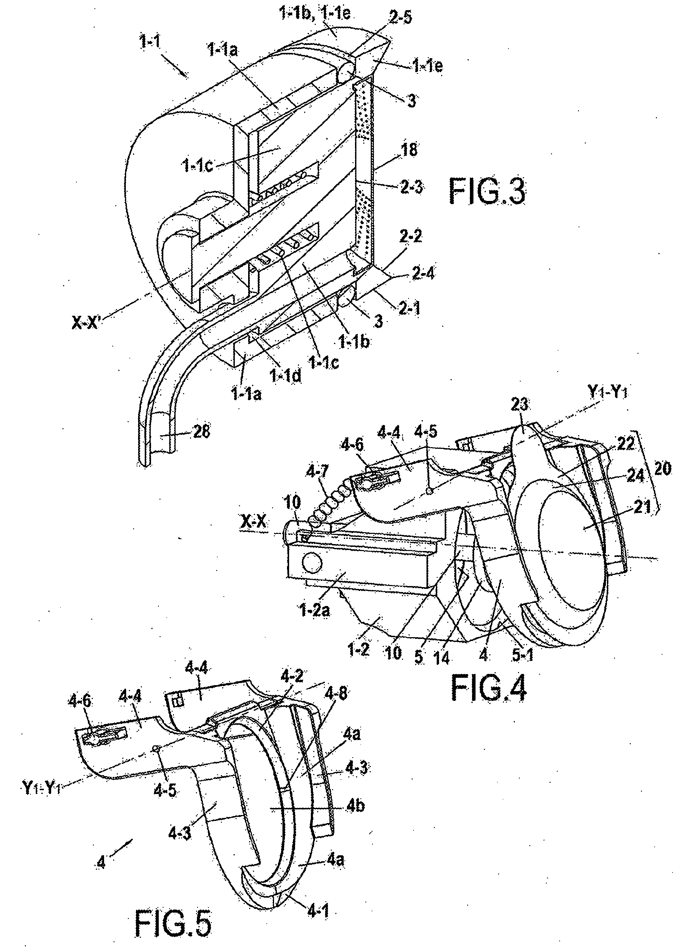

Comme montré sur la figure 3, la première pièce mâle ou piston 1-1 comprend :
- une partie arrière 1-1a présentant une surface externe périphérique cylindrique, ladite partie arrière 1-1a comprenant un logement interne creux 1-1d cylindrique ;
- une partie avant 1-1b comprenant une partie interne cylindrique 1-1c contenue en tout ou partie dans le cylindre creux 1-1d de ladite partie arrière 1-1a, une partie externe 1-1e comprenant une face avant externe 2 constituant la face avant externe de la première pièce mâle 1-1, ladite partie externe 1-1e n'étant pas contenue à l'intérieur de la partie cylindrique creuse 1-1d de la partie arrière 1-1a et dépassant à l'extérieure de celle -ci;
- un joint torique élastique 3 entourant la partie cylindrique de la partie interne cylindrique 1-1c juste en arrière de la partie externe 1-1e de telle sorte que le joint déformable 3 est intercalé entre ladite parties arrière 1-1a et ladite partie externe 1-1e comprenant la face avant externe 2 de la première pièce mâle 1-1 ;
- un premier ressort 1-1c reliant ladite partie interne cylindrique de la partie avant 1-1b avec le fond du creux 1-1d de la partie arrière 1-1a de la première pièce mâle 1-1, de telle sorte que, en position d'extension du premier ressort 1-1c, le joint déformable 3 est en position non contrainte et ne dépasse pas la surface cylindrique externe de la partie arrière 1-1a dans la direction radiale par rapport à l'axe longitudinal XX' de la première pièce mâle 1-1.

Sur les figures 3 et 8A on montre que la face avant 2 de ladite partie externe 1-1e de ladite partie avant 1-1b comprend :
- une surface centrale circulaire 2-3 plane, perpendiculaire à l'axe longitudinal XX' de la première pièce mâle 1-1, ladite surface centrale circulaire 2-3 étant en léger retrait par rapport à une première plaque perforée 18 de même section circulaire quel ladite surface centrale circulaire 2-3 et supportée par celle-ci;
- une surface tronconique périphérique 2-1 de diamètre décroissant depuis l'arrière 2-5 de la partie externe 1-1e vers l'extrémité avant en pointe 2-4 de ladite surface 2-1 constituant l'extrémité avant de la face avant 2 de la première mâle 1-1, le plus grand diamètre de la surface tronconique 2-1 à son extrémité arrière 2-5 ne dépassant pas le diamètre de la surface cylindrique externe de la partie arrière 1-1a de la première pièce mâle 1-1 ;
- une surface tronconique intermédiaire 2-2 intercalée entre ladite première plaque perforée 18 et l'extrémité avant 2-4 de la surface tronconique périphérique 2-1, ladite surface tronconique intermédiaire 2-2 entourant ladite première plaque perforée 18 et présentant un diamètre croissant depuis ladite première plaque 18 jusqu'à ladite extrémité avant 2-4 de la surface tronconique périphérique 2-1.

La partie cylindrique interne 1-1d e la partie arrière 1-1b de la première pièce mâle 1-1 est traversée par un conduit d'évacuation 28 débouchant sur la surface centrale 2-3 de la face avant 2, de telle sorte que les perforations de la première plaque perforée 18 permettent l'évacuation du liquide aromatisé après l'étape d'extraction décrite ci-après.

Comme montré sur les figures 1B, 2 et 6A, la deuxième pièce femelle 1-2 comprend un corps délimitant une chambre interne 5 à paroi cylindrique 5a de diamètre légèrement supérieur au diamètre maximal de la première pièce mâle 1-1, à savoir le diamètre de la surface cylindrique externe de la partie arrière 1-1a de la première pièce mâle 1-1. L'extrémité avant ouverte de la chambre cylindrique 5 est délimitée par une surface tronconique 5-1 et débouche sur un compartiment d'éjection 7 délimité par la face arrière 4c du berceau 4.

La surface tronconique 2-1 du piston 1-1 délimite avec la surface cylindrique interne 5a de la chambre 5 un logement 2a lorsque le piston 1-1 est à l'intérieur de la chambre 5 en rapprochement maximal en translation relative des pièces 1-1 et 1-2. L'angle entre ladite surface tronconique périphérique 2-1 et la surface d'enveloppe cylindrique horizontale 5a de la chambre 5 est de 1 à 5°.

Dans un mode de réalisation, le logement 2a de la collerette pliée 22 représente une longueur de 8 millimètres dans la direction longitudinale XX' et une largeur d'environ 2 millimètres dans la direction radiale perpendiculaire à la direction XX', .représentant la différence entre le diamètre de l'extrémité avant 2-4 de la face avant 2 de 43 millimètres et le diamètre interne de la paroi cylindrique 5a de 45 millimètres.

Dans un mode de réalisation, le recul de la face avant 2 de la première pièce mâle 1-1 lors de sa compression longitudinale est de 0,5 millimètre, ce qui suffit à déformer le joint torique 3 en l'ovalisant de façon à supprimer le jeu fonctionnel de 1 millimètre entre le diamètre externe de 44 millimètres de la partie arrière 1-1a de la première pièce mâle 1-1 et le diamètre de la paroi cylindrique 5b pour former une chambre d'extraction close et étanche.

Un berceau 4, formé d'un anneau délimitant une ouverture en partie circulaire ou ovale 4b, est fixé sur la deuxième pièce femelle 1-2, par l'intermédiaire de deux bras latéraux 4-4 supportant un axe disposé selon une direction horizontale transversale Y₁Y₁, fixé au niveau d'orifices 4-5 des bras 4-4 et solidaire de la partie supérieure de ladite deuxième pièce femelle 1-2 sur chacune de ses faces, de telle sorte que ledit berceau 4 peut être articulé en rotation, comme explicité ci-après, en avant de l'ouverture 5-1 en face avant de la chambre 5 de la deuxième pièce femelle 1-2.

Plus précisément, le berceau 4 peut pivoter entre une position verticale de sa face arrière plane 4c et une position inclinée de sa face arrière 4c.

Dans sa position d'inclinaison maximale, le plan P de la face arrière 4c est incliné d'un angle α d'environ 10 à 30°, plus particulièrement de 16°, par rapport à la verticale en face avant de l'ouverture de la chambre 5 ou en face avant du piston 1-1, le berceau 4 délimite :
- un compartiment d'insertion 6 entre la face avant 2 du piston 1-1 et la face avant du berceau 4, lorsque la deuxième pièce femelle 1-2 et le piston 1-1 sont en position d'écartement maximal, et
- un compartiment d'éjection 7 entre l'ouverture 5-1 de la chambre 5 et la face arrière 4c du berceau 4, lorsque le piston 1-1 et la pièce femelle 1-2 sont en position d'écartement maximal en translation relative.

Des moyens de rappel élastiques ou ressorts 4-7, fixés, d'une part, sur le dessus de la première pièce mobile 1-2 et, d'autre part, au niveau des bras 4-4, assurent le maintien en position d'inclinaison maximale du berceau, en l'absence de force de poussée exercée sur la partie inférieure 4-1 du berceau en cas de déplacement en translation relative de la deuxième pièce femelle 1-2 en direction du piston 1-1, comme il sera explicité ci-après.

L'ouverture 4b du berceau 4 est délimitée par une surface tronconique avant 4a et encadrée en partie supérieure par des rebords latéraux 4-3.

On comprend que les axes de fixation en pivotement des bras 4-4, sur la partie supérieure de la deuxième pièce femelle 1-2, sont disposés en retrait vers l'arrière par rapport à l'ouverture avant 5-1 de la chambre 5.

Les branches latérales 4-4 du berceau comportent, sur leur face externe, des éléments de guidage ou doigts 4-6 engagés dans des rainures 1-3b du châssis 1-3, de manière à guider et contrôler le pivotement du berceau 4 lorsque l'on déplace en translation relative la deuxième pièce femelle 1-2 par rapport au piston 1-1, comme il sera explicité ci-après. Pour ce faire, la rainure 1-3b comporte deux parties rectilignes, inclinées l'une par rapport à l'autre, dont une première partie 1-3b1 inclinée par rapport à l'horizontale se prolongeant par une deuxième partie 1-3b2 horizontale. La première partie 1-3b1 est du côté de la première pièce mâle et la deuxième partie 1-3b2 est du côté de la deuxième pièce femelle.

En position initiale d'ouverture du compartiment d'insertion 6, les deux première pièce mâle 1-1 et deuxième pièce femelle 1-2 sont en position d'éloignement maximal en translation relative l'une par rapport à l'autre. Du fait des tractions exercées par les ressorts 4-7 sur les bras latéraux 4-4, les doigts 4-6 arrivent au fond de la partie de rainure inclinée 1-3b1, en partie basse de celle-ci, et la partie inférieure 4-1 du berceau 4 arrive à proximité de la pointe 2-4 de la face avant 2 du piston 1-1 au niveau de sa partie inférieure, en ménageant un espace en forme de fente 8 apte à recevoir la collerette 22 lorsque l'on insère la dosette 20 par l'ouverture supérieure ouverte du compartiment d'insertion 6. Le compartiment 6 présente une forme en V délimitée par la face avant 2 du piston 1-1 et la face avant 4a du berceau 4.

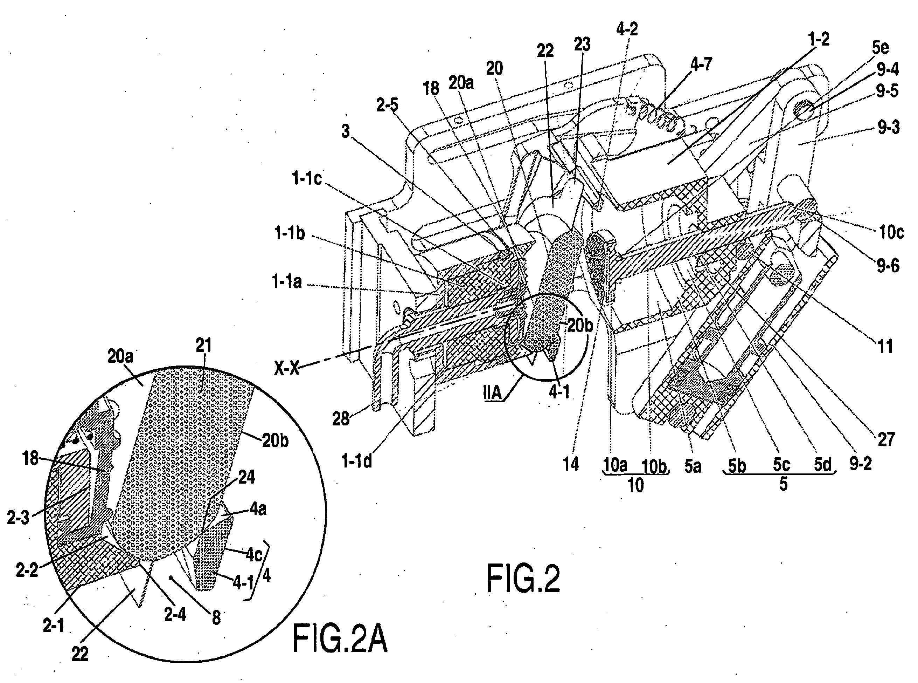

Dans cette position initiale d'ouverture, la dosette est retenue dans le compartiment d'insertion 6 de la manière suivante :
- d'une part, une face arrière 20b de la dosette vient en appui au niveau de la partie inférieure périphérique bombée 24 de la pastille 21 contre la surface tronconique avant 4a du berceau 4, la partie de la surface tronconique 4a dans la partie inférieure 4-1 du berceau 4 empêchant la dosette de tomber, et
- d'autre part, la partie inférieure de la partie périphérique bombée 24 de la face avant 20a de la pastille 21 de la dosette 20 arrive en appui contre la partie inférieure de la surface tronconique intermédiaire 2-1 de la face avant 2 du piston 1-1, comme représenté sur la figure 2A.

Dans cette position initiale d'ouverture d'insertion de la dosette dans le compartiment d'insertion 6, la surface tronconique 4a de la face avant de la partie inférieure 4-1 du berceau est en vis-à-vis de la face avant 2 du piston 1-1 dans sa partie inférieure. Cet appui initial en sous-face de la zone pleine 24 de la pastille 21 de la dosette 20, des deux côtés 20a et 20b de la dosette, garantit une parfaite coaxialité de la dosette lorsque celle-ci sera en position verticale après pivotement du berceau 4, comme décrit ci-après.

Dans cette position initiale d'ouverture d'insertion, la dosette est maintenue également latéralement du fait que les bords externes de sa collerette 22 sont retenus par les bords latéraux 4-3 en avant de la surface tronconique 4a sur la face avant du berceau 4, ses bras 4-3 s'interrompent de manière à ce que la partie inférieure 4-1 du berceau ne comportent pas de bras latéraux 4-3, de manière à ménager la fente 8 permettant le passage de la collerette 22 entre la pointe 2-4 de la face avant du piston 1-1 et la partie la plus avancée de la partie inférieure 4-1 du berceau 4 sur sa face avant.

Lorsque la deuxième pièce femelle 1-2 est déplacée en translation relative pour se rapprocher du piston 1-1, comme il sera décrit ci-après, les éléments de guidage externes 4-6 du berceau 4 se déplacent concomitamment dans la partie rectiligne inclinée de rainure 1-3b1, ce qui provoque ainsi le pivotement du berceau 4 de manière à ce que l'angle, entre sa face arrière 4c et la verticale, diminue jusqu'à ce que les éléments 4-6 arrivent dans la deuxième partie horizontale de la rainure 1-3b2, le berceau étant alors avec sa face arrière 4c en position verticale. A ce stade, la partie inférieure 4-1 du berceau 4 est entièrement dégagée dessous la surface inférieure cylindrique 5a de la chambre 5. Ainsi, l'ouverture 4b du berceau est telle que, lorsque l'on continue la translation horizontale de l'ensemble de la deuxième pièce femelle 1-2 et du berceau 4 en position verticale, le piston 1-1 peut traverser l'ouverture 4b, sans être géné par la partie inférieure 4-1 du berceau 4.

L'ouverture 4b du berceau présente, en effet, une dimension supérieure à la surface de la section circulaire de la surface cylindrique externe du piston 1-1, de manière à autoriser la traversée par le piston 1-1 en fin de basculement en position verticale du plan de l'orifice 4b puis la translation relative du berceau autour du piston 1-1.

Lorsque la dosette 20 est dans le compartiment d'insertion 6 et que l'on réalise le déplacement en translation relative de la deuxième pièce femelle 1-2 en direction du piston 1-1 et donc le pivotement du berceau 4 jusqu'à sa position verticale, d'une part, et que, d'autre part, le piston 1-1 traverse l'ouverture 4b du berceau 4, le piston emporte avec lui, à l'intérieur de la chambre 5, la dosette 20 dont la collerette 22 se plie. Le pliage de la collerette 22 est favorisé par la face avant tronconique 5-1 de l'ouverture de la chambre 5. Les conditions du pliage de la collerette 22 dans un logement périphérique 2a seront décrites ci-après.

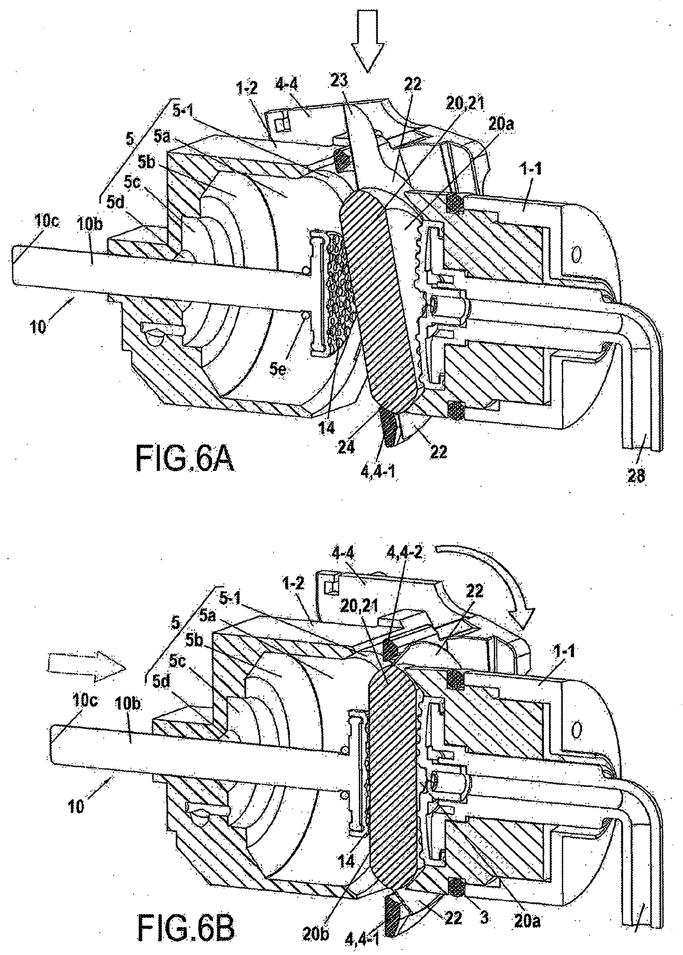

L'ouverture 4b du berceau 4 est en fait formée par une partie supérieure 4-2, délimitant une section semi-circulaire supérieure de l'orifice 4b, et une partie inférieure 4-1, délimitant une section semi-circulaire inférieure de l'orifice 4b, les deux parties semi-circulaires étant réunies par des parties latérales verticales 4-8 de même hauteur d. Du fait de cette distance verticale d, la partie inférieure 4-1 du berceau se trouve en dessous de la surface cylindrique autour du piston 1-1 et l'entoure lorsque celle-ci pivote depuis la position d'inclinaison maximale des figures 1B et 6A jusqu'à la position verticale de la figure 6B.

La surface tronconique intermédiaire 2-1 de la face avant du piston présente une section circulaire sensiblement identique à celle de la pastille pleine 21 de la dosette 20.

Ainsi, dans la position verticale de la dosette après pivotement du berceau 4, la dosette n'est plus retenue dans sa partie inférieure par la partie inférieure de la surface tronconique 4a de la face avant du berceau, du fait que celui-ci est maintenant dégagé dessous le piston 1-1; mais la dosette est quand même maintenue contre la face avant du piston 1-1 par une deuxième plaque 14 d'un éjecteur 10, celle-ci arrivant en appui contre la face avant 20a de la dosette 20 sur toute la périphérie de partie bombée périphérique 24 de la dosette à ce stade, comme il sera décrit ci-après.

La chambre cylindrique 5 contient en effet un élément appelé éjecteur 10 constitué d'une tige 10b disposée axialement dans la direction longitudinale axiale XX' de la chambre cylindrique 5 coïncidant avec la direction longitudinale axiale XX' de la première pièce mâle fixe 1-1. La tige 10b se termine, à son extrémité avant, par une plaque transversale 10a, elle-même supportant une deuxième plaque perforée 14.

La tige 10b traverse le fond 5b de la chambre 5 au niveau d'un orifice central 5d. Le fond 5d de la chambre 5 comprend un renfoncement 5c permettant d'y loger une deuxième plaque perforée circulaire verticale 14 recouvrant l'extrémité avant 10a de la tige 10b. La tige 10b est apte à être déplacée en translation relative longitudinale axiale par rapport au corps délimitant la chambre circulaire 5 lorsque celle-ci est en déplacement en translation relative par rapport au piston 1-1 comme explicité ci-après.

L'extrémité arrière 10c de la tige 10b est toujours située à l'extérieur du corps délimitant la chambre cylindrique 5. Lorsque l'on déplace en translation relative la première pièce femelle 1-2 vers le piston 1-1, en translation relative de rapprochement maximal des deux pièces 1-1 et 1-2, la deuxième plaque perforée 14 est entrainée en translation relative vers l'arrière de la chambre 5 jusque dans un renfoncement 5c au fond de la chambre 5. Un joint torique 5e entoure l'extrémité avant de la tige 10b juste en arrière de la deuxième plaque perforée 14 et assure l'étanchéité de la chambre 5 au niveau de son orifice arrière 5d lorsque ladite deuxième plaque perforée 14 est logée en compression dans le renfoncement 5c sous l'effet de la translation relative du piston 1-1.

Le corps de la chambre 5 est traversé par un conduit d'alimentation 27 qui débouche sur le fond 5b de la chambre 5 et permet au liquide d'alimentation de traverser les perforations de la deuxième plaque perforée 14 puis traverser la dosette dont la face arrière 20b est en appui contre ladite deuxième plaque 14 dans la chambre d'extraction en dite position de fermeture de translation relative desdites première pièce mâle 1-1 et deuxième pièce femelle 1-2 comme il sera explicité ci-après.

Comme explicité ci-après, la translation de la pièce femelle 1-2 emporte concomitamment l'éjecteur 10 en translation sauf dans les deux conditions suivantes :
- lorsque la pièce 1-2 s'éloigne de la pièce 1-1 et que l'extrémité arrière 10c de la tige 10b est retenue en butée contre l'axe 9-6 horizontal décrit ci-après, et
- lorsque la pièce la pièce 1-2 se rapproche du piston 1-1 et que la plaque 14 de l'éjecteur vient buter sur la dosette elle-même appliquée contre la face avant du piston 1-1.

Sur les figures 2 et 8, dans un premier mode de réalisation de mis en oeuvre manuelle, les moyens de translation relative 9 permettant la translation relative de la deuxième pièce femelle mobile 1-2 par rapport à la première pièce mâle fixe 1-1, comprennent un levier 9-1 actionnable en rotation autour d'un axe de rotation 9-1a s'étendant dans une direction transversale perpendiculaire à ladite direction longitudinale axiale XX', axe 9-1a dont les extrémités sont solidaires du châssis 1-3, au-dessus du corps 1-2 de la chambre cylindrique 5. Ledit axe de rotation 9-1a entraine en rotation une première roue crantée 9-2a qui lui est solidaire et de même axe. Une courroie crantée 9-2b entoure et assure la liaison cinématique de la première roue crantée 9-2a avec une deuxième roue crantée 9-2a solidaire et entraînée en rotation par l'axe de rotation 9-6, lui-même solidaire du châssis 1-3. Le pivotement du levier 9-1 entraine la rotation de la première roue crantée 9-2a. Et la rotation de la première roue crantée 9-2a entraine en rotation la courroie 9-2b et concomitamment la rotation de la deuxième roue crantée 9-2a. La rotation de la deuxième roue crantée 9-2a entraine en rotation un premier bras 9-3 d'un système de biellettes, ledit premier bras 9-3 étant solidaire à une de ses extrémités de la deuxième roue crantée 9-2a. L'autre extrémité du bras 9-3 est fixée selon une articulation en rotation autour d'un axe 9-4 à l'extrémité d'un deuxième bras 9-5, l'autre extrémité du deuxième bras 9-5 étant fixée à l'extérieur du corps délimitant la chambre 5 au niveau d'une articulation en rotation solidaire du corps 1-2. Ainsi, l'actionnement en rotation de la poignée 9-1 entraine le pivotement des deux bras 9-3 et 9-5 du système de biellettes 9 et la translation de la deuxième pièce femelle mobile 1-2 dans ladite direction axiale XX'. La pièce 1-2 est bloquée en translation d'éloignement du piston 1-1 par un axe transversal de butée 11 solidaire du châssis 1-3

En fait, les premiers moyens de translation relative 9 comprennent deux systèmes de biellettes 9 comportant chacun un premier bras 9-3 et deuxième bras 9-5 reliés au même levier 9-1 par deux systèmes de transmission par courroie 9-2b et engrenages 9-2a de part et d'autre du plan axial longitudinal vertical du corps délimitant la chambre cylindrique 5.

La position de pivotement vers le haut maximal de la poignée 9-1 détermine une position d'ouverture et d'insertion en translation relative maximale de ladite deuxième pièce femelle mobile 1-2.

Les deux bras 9-5 forment les deux branches d'un étrier solidaire du châssis 1-3 au niveau de l'axe transversal commun de rotation 9-6 à l'extrémité inférieure des bras 9-5. Le fonctionnement et l'utilisation du dispositif selon l'invention sont explicités dans les différentes étapes suivantes.

Lesdits moyens de translation relative 9 de la deuxième pièce femelle 1-2 par rapport à la première pièce mâle 1-1 peuvent être réalisés par un système hydraulique, à piston, ou tout autre système motorisé à vis ou came ou autre, à la place du système de biellettes décrit ci-dessus.

Le guidage en translation coaxiale desdites deuxième pièce femelle 1-2 et première pièce mâle 1-1 est assuré par des éléments de guidage mâle 1-2a sur la face externe du corps de la chambre cylindrique 5 et des éléments de guidage femelles en forme de rainures ou ouvertures longitudinales 1-3a dans le châssis 1-3.

Sur les figures 1A et 1B, le bras 9-4 se prolonge en dessous de l'axe inférieur 9-6 et le système de biellette 9 est actionné directement par un vérin 9-2 et non pas manuellement par le levier 9-1. La tige du vérin 9-2 est reliée à l'extrémité inférieure du bras 9-4, ce qui permet en actionnant le vérin 9-2 de provoquer la rotation du bras 9-4 autour de son axe de rotation médian 9-6, entraînant ainsi la rotation de l'axe supérieur 9-3 de liaison articulé en rotation avec le deuxième bras 9-5.

Sur la figure 1B, on a également représenté une cheminée 1-5, disposée au-dessus du corps constituant la pièce femelle 1-2, inclinée par rapport à la verticale, définissant une ouverture 1-5a, l'extrémité inférieure de l'ouverture 1-5a de la cheminée 1-5 coïncidant avec l'ouverture supérieure du compartiment d'insertion 6 lorsque le berceau 4 est en position d'inclinaison maximale, comme représenté sur la figure 1B. Ceci permet d'assurer le guidage de l'insertion de la dosette 20 en position inclinée dans son compartiment d'insertion 6.

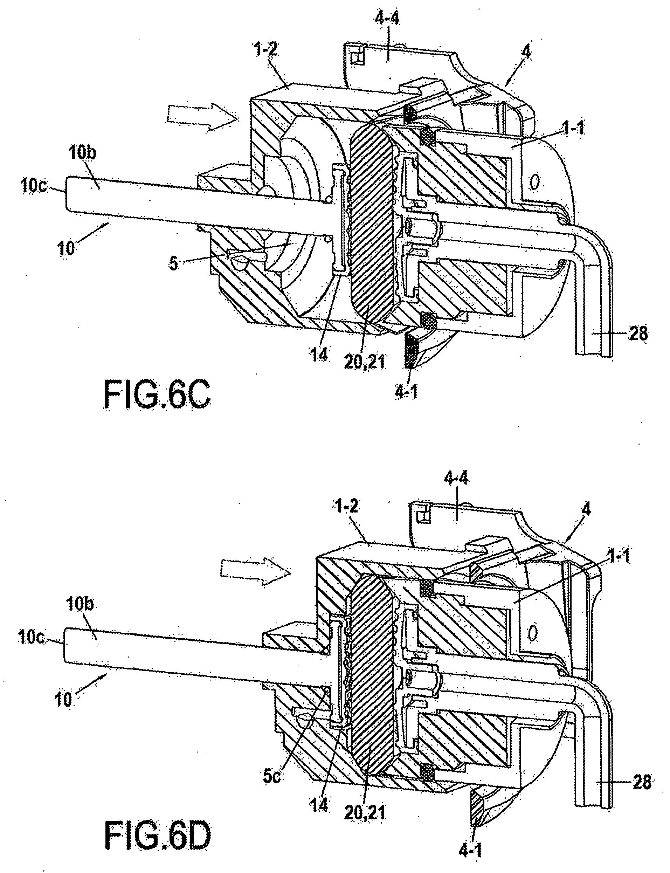

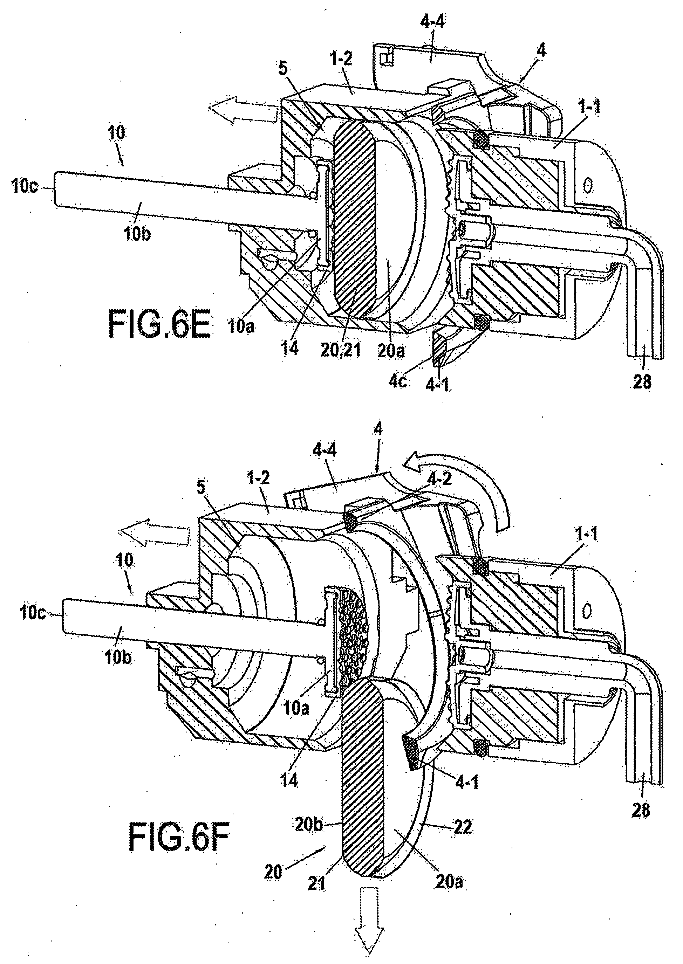

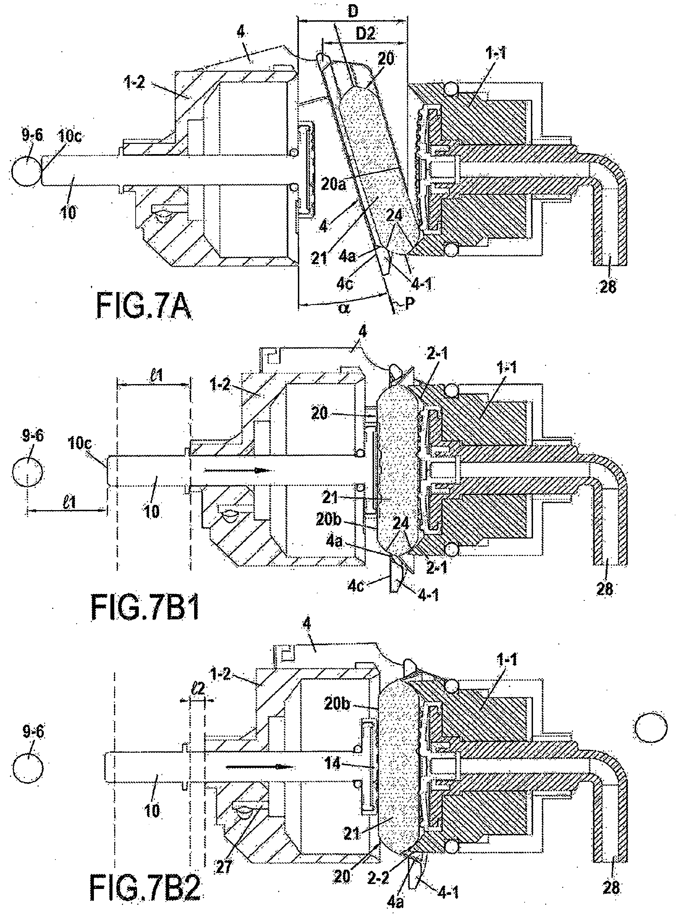

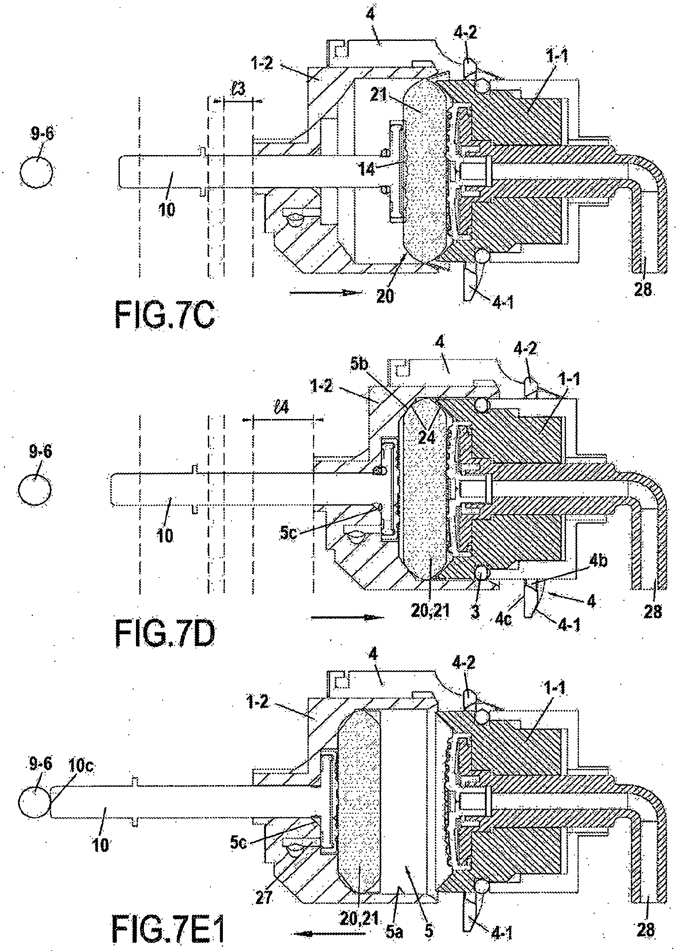

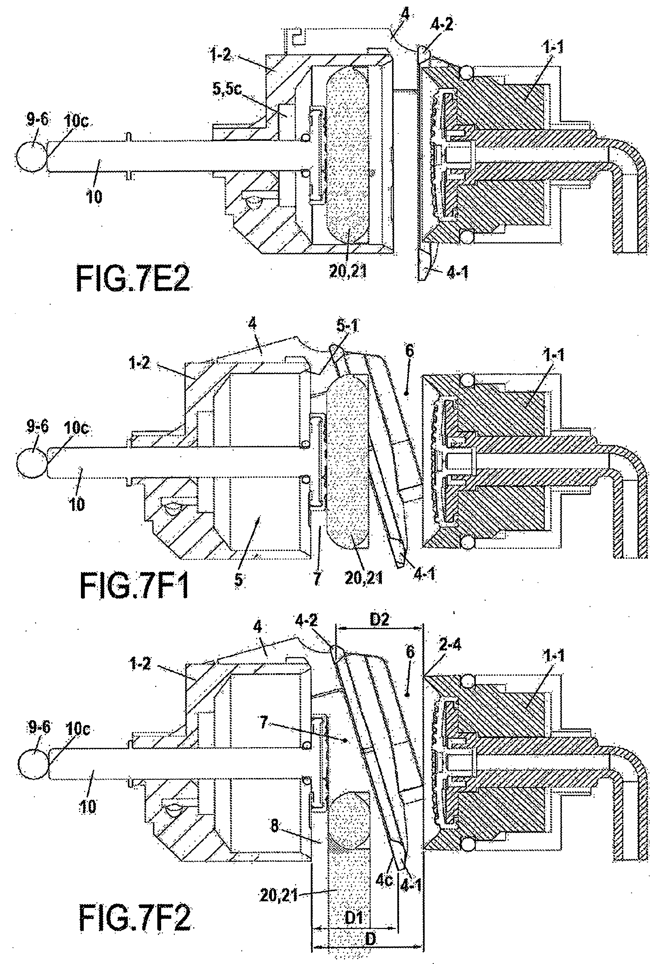

La mise en oeuvre du dispositif selon l'invention comprend les étapes suivantes :
1- Dans une étape initiale représentée sur les figures 6A et 7A, le levier 9-1 ou le vérin 9-2 ont été actionnés pour provoquer une rotation maximale du système de biellettes 9, de sorte que lesdites première pièce mâle 1-1 et deuxième pièce femelle 1-2 sont en position d'écartement maximal en translation relative, dénommée position d'ouverture et d'insertion, dans laquelle le berceau 4 est en position d'inclinaison maximale du fait du ressort de rappel 4-7 agissant en traction sur l'extrémité de ses bras 4-4, provoquant la rotation du berceau autour de son axe Y₁Y₁. Dans cette position d'inclinaison maximale du berceau, la partie inférieure 4-1 du berceau est située à proximité de la pointe 2-4 de la face avant 2 du piston 1-1, en ménageant un espace formant une fente 8, comme montré figure 2A, dans laquelle la collerette 22 de la dosette 20 est insérée lorsque la dosette 20 est positionnée dans le compartiment d'insertion 6 en forme de V, formé par la face avant du berceau 4 et la face avant 2 du piston 1-1.
   Dans cette position initiale d'écartement maximal, les dimensions respectives dans la direction axiale XX' de l'éjecteur 10 et de la chambre 5 sont telles que l'extrémité arrière 10c de la tige 10b de l'éjecteur 10 est en butée contre l'axe transversal 9-6 de rotation du bras arrière 9-4 du système de biellettes 9, et la plaque avant 10a recouverte de la deuxième plaque 14 de l'éjecteur 10 arrive sensiblement juste en avant de l'ouverture 5-1 de la chambre 5 et, par conséquent, en arrière du berceau 4.
   Comme explicité précédemment, dans cette position initiale d'insertion et d'ouverture, la dosette 20 est maintenue latéralement au niveau de sa collerette 22 par les bords latéraux 4-3 de l'anneau d'ouverture 4b du berceau 4, tandis que la partie inférieure 4-1 du berceau supporte, au niveau de ladite surface tronconique 4a de sa face avant, la périphérie 24 de la partie pleine bombée de la pastille 21, en sous-face de celle-ci. Cet appui sur la pastille assure un positionnement constant de la dosette, quelles que soient les variations de dimension de la collerette, et plus stable de la pastille par rapport à l'axe longitudinal XX' que si la dosette 20 était soutenue dans sa partie inférieure par la collerette 22. Sur sa face avant 20a, la collerette n'est soutenue que par la partie inférieure de la surface tronconique intermédiaire 2-1 de la face avant 2 du piston 1-1, toujours en sous-face de la partie bombée 24 de la périphérie de la pastille 21 pleine de café de la dosette 20.
   Dans cette position initiale d'ouverture et d'écartement maximal des pièces 1-1 et 1-2, leurs faces avant respectives sont écartées d'une distance maximale D.
2- Sur les figures 6B et 7B1, on a commencé à actionner les moyens de translation relative 9, de sorte que la deuxième pièce femelle 1-2 a été avancée dans la direction XX' d'une longueur I1.
   L'écartement des pièces 1-1 et 1-2 est réduit d'une même longueur I1. A ce stade, le berceau 4 a pivoté pour adopter une face arrière 4c de son anneau en position verticale La dosette et l'ouverture circulaire 4b du berceau sont disposées verticalement coaxialement XX' au piston 1-1 et à la chambre 5. L'ouverture 4b du berceau étant de plus grande dimension que la section verticale du piston 1-1 et de l'ouverture 5-1 de ladite chambre 5, la partie supérieure 4-2 et la partie intercalaire 4-1 de l'ouverture 4b sont dégagées au dessus et, respectivement, au dessous de l'ouverture 5-1 de la chambre 5, de sorte que le piston 1-1 puisse traverser et pénétrer ensuite dans la chambre 5 par translation. A ce stade, la dosette est toujours maintenue sur sa face avant 20a par la surface tronconique intermédiaire 2-1 de la face avant 2 du piston 1-1 qui supporte la totalité de la circonférence de la partie bombée périphérique 24 de la pastille 21 de la dosette 20. En revanche, la face arrière 20b de la dosette 20 n'est plus retenue en partie inférieure de sa partie périphérique bombée 24 par la partie inférieure 4-1 du berceau 4. Toutefois, une fois dans cette position, la plaque 14 est toujours juste en avant de l'ouverture 5-1 de la chambre 5 et vient en appui sur la face arrière 20b de la dosette 20, au niveau de la surface centrale circulaire de sa pastille pleine 21, ce qui est suffisant pour supporter la dosette 20 en position verticale du fait que sa partie inférieure est suffisamment retenue par la partie inférieure de la surface tronconique intermédiaire 2-1 de la face avant 2 du piston 1-1.
   On notera que, dans cette position de la figure 7B, l'extrémité arrière 10c de la tige de l'éjecteur 10 n'est plus retenue par la butée de l'axe 9-6.
3- sur la figure 7B2, on a continué la translation de la pièce 1-2 d'une longueur I2 en direction du piston fixe 1-1 dans la direction longitudinale XX'. Mais, l'éjecteur 10 ne bouge pas car la plaque 14 bute sur la dosette 20. Ainsi, la plaque 14 en avant de l'éjecteur 10 recule d'une même longueur I2. Et, l'ouverture ovale 4b de l'anneau du berceau 4 est traversée par le piston 1-1, au niveau des extrémités en pointe 2-4 de sa face avant 2. Celui-ci entraîne la dosette 20 toujours en appui sur sa face arrière 20b contre la plaque 14, provoquant le commencement du pliage de la collerette 22. A ce stade, la collerette se trouve pliée dans l'espace entre la surface cylindrique externe tronconique 2-2 de la face avant 2 du piston 1-1 et la face avant 4a de l'ouverture 4b du berceau 4.
4- Sur les figures 6C et 7C, on a continué la translation relative de la pièce 1-2 en direction du piston 1-1 de 13, de sorte que la dosette et la collerette pliée 22 ont totalement traversé l'ouverture 4b du berceau 4. La pointe avant 2-4 du piston est juste en avant de l'ouverture 5-1 de la chambre 5 et le berceau 4 entoure maintenant la surface tronconique externe périphérique 2-2 de la face avant 2 du piston 1-1 en avant encore du joint torique 3. A ce stade, l'éjecteur 10 n'a pas bougé et se trouve à environ à mi-longueur dans la direction XX' de la chambre interne 5.
   La surface tronconique avant 5-1 de l'ouverture de la chambre 5 favorise le maintien replié de la collerette 22 lorsque le piston 1-1 pénètre dans la chambre 5.
5- Sur les figures 6D, 7D et 8, on a continué la translation relative de la pièce femelle 1-2 de I4, de sorte que la dosette 20 vient maintenant en appui sur sa face arrière 20b contre la surface tronconique périphérique 5b du fond de la chambre 5, au niveau de sa partie bombée périphérique 24. Et, la partie centrale circulaire de la pastille 21 vient en appui contre la plaque 14 de l'éjecteur 10, laquelle plaque 14 vient se loger dans l'échancrure 5c au fond de la chambre 5. Dans cette position, le joint torique 3 du piston 1-1, après avoir parcouru en translation l'intérieur de la chambre 5 sans contact avec la paroi cylindrique 5a, se trouve maintenant comprimé et en contact étanche avec la paroi 5a, comme montré sur la figure 8A. Dans cette position des figures 6D et 7D, la plaque perforée 18 de la face avant 2 du piston 1-1 est en appui contre la face avant 20a de la dosette 20, réalisant une compression de la pastille 21 de la dosette 20.
   Dans cette position des figures 6D et 7D, la collerette 22 est pliée dans le logement 2a, tel que décrit sur la figure 8A.
   La compression dans la direction longitudinale axiale XX' de la partie avant 1-1c du piston contre la partie arrière 1-1b du piston 1-1 a pour effet de comprimer le joint 3. Ainsi, le joint 3 passe de sa position initiale non comprimée à section transversale circulaire à une position comprimée dans laquelle le joint 3 a une section transversale ovalisée comme représenté sur la figure 8A, dans laquelle le plus grand diamètre du joint torique ovalisé permet que le joint 3 vienne en appui étanche contre la surface cylindrique 5b de la chambre 5.
   La compression du joint torique 3 et du joint 5e fermant l'orifice 5d autour du bras 10b de l'éjecteur 10, assure l'étanchéisation d'une chambre d'extraction. La partie de l'intérieur de la chambre 5, délimité entre le joint torique 3 et le joint 5e, constitue ladite chambre d'extraction étanche.
   Pendant cette phase de compression dans la direction longitudinale XX', le premier ressort 1-1c est comprimé. A ce stade, les première pièce mâle 1-1 et deuxième pièce femelle 1-2 sont en translation relative de rapprochement maximal ou fermeture maximale.
   Une fois l'étape 5- ci-dessus atteinte, on peut injecter un liquide sous pression dans le conduit d'alimentation 28 qui traverse la deuxième plaque perforée 14, puis la dosette 20, puis la première plaque perforée 18 et s'évacue par le conduit d'évacuation 27 pour obtenir une boisson enrichie en arômes extraits de la poudre contenue dans la dosette 20.
6- Ensuite, on actionne en rotation vers le haut le levier 9-1 ou on actionne le vérin 9-2 pour atteindre une position représentée sur les figures 6E et 7E1 par déplacement en translation relative en sens inverse de la pièce femelle 1-2.
   Dès que l'on relâche la compression longitudinale contre la face avant 2 de la première pièce mâle 1-1 par actionnement en rotation vers lé haut du levier 9-1, le premier ressort 1-1c exerce une poussée en avant de la face avant 2 de la première pièce mâle 1-1 et le joint 3 reprend sa forme initiale non contrainte à section circulaire 3a, celui-ci n'étant plus en contact avec la surface cylindrique 5a de la chambre 5 pendant cette translation inverse. L'éjecteur 10 est entraîné en translation relative, concomitamment avec la pièce femelle 1-2 car la dosette 20 reste en appui au fond de la chambre 5 contre la plaque 14. La dosette 20 reste collée au fond de la chambre 5 du fait que la surface d'appui 5b sur le fond de la chambre 5 est plus importante que la surface d'appui tronconique 2-1 de la face avant du piston 1-1. La forme tronconique évasée de la surface intermédiaire 2-2 de la face avant 2 de la première pièce mâle 1-1 favorise également le décollement de la face avant 20a de la dosette 20 par rapport à la première plaque perforée 18.
7- Sur les figures 7E2, on a continué la translation relative de recul de la pièce 1-2 par rapport au piston 1-1. Du fait que l'extrémité arrière 10c de la tige 10b de l'éjecteur 10 soit retenue en butée sur l'axe 9-6, la plaque 14 sort du renforcement 5c au fond de la chambre 5 et se déplace en translation relative par rapport à la chambre 5, la dosette 20 arrivant sensiblement à mi-longueur de la chambre 5 dans la direction XX'.
8- Sur les figures 6F, 7F1 et 7F2, on a continué la translation relative en recul de la pièce femelle 1-2 par rapport au piston 1-1, de sorte que les doigts 4-6 des bras 4-4 du berceau 4 arrivent dans la partie inclinée 1-3b1 de la rainure 1-3b de guidage provoquant le pivotement du berceau jusqu'à son inclinaison maximale. Concomitamment, la plaque 14 de l'éjecteur 10 arrive juste en avant de l'ouverture avant 5-1 de la chambre 5, positionnant ainsi la dosette 20 dans le compartiment d'éjection 7 délimité par la face avant 2 du piston 1-1 et la face arrière 4c inclinée du berceau 4 en position d'inclinaison maximale. Le compartiment d'éjection 7 présente une forme en ^ avec une ouverture inférieure plus large D1 que la dosette, permettant la chute de la dosette par gravité dans l'espace D d'écartement maximal entre les pièce femelle 1-2 et pièce mâle 1-1, comme représenté sur la figure 6F et 7F2.

Comme montré sur la figure 7F2, la dosette 20 n'est plus soutenue, ni par la face avant 2 du piston 1-1, ni par la partie inférieure 4-1 du berceau 4, du fait du pivotement dudit berceau et du fait que l'éloignement D1 entre la face arrière 4c de la partie inférieure 4-1 du berceau et la pointe 2-4 de la face avant 2 du piston 1-1 est supérieure à l'épaisseur de la dosette 20.

Les deux pièces mâle 1-1 et femelle 1-2 et le berceau 4 se trouvent alors en même position d'éloignement maximal D que dans la position initiale des figures 7A et 6A et l'ouverture supérieure D2 du compartiment d'insertion 6, c'est-à-dire la distance entre la partie supérieure 4-2 du berceau 4 et la pointe 2-4 de la face avant 2 du piston 1-1, est supérieure à l'épaisseur de la dosette 20 pour permettre son insertion dans le compartiment 6, comme représenté sur la figure 6A et 7A.

Lors des différentes translations en ouverture et fermeture, le joint torique 3 est en position à section circulaire 3a dans laquelle il n'y a pas de contact ou de frottement avec la paroi cylindrique 5a de la chambre 5 lors de ce déplacement.

L'éjecteur 10, et plus particulièrement la deuxième plaque perforée 14, possède deux positions d'arrêt en translation, respectivement en dite position « d'ouverture et d'insertion » telle que représentée sur les figures 1, et en dite position « d'ouverture et d'éjection » telle que représentée sur les figures 10-6 et 10-7.

La mise en oeuvre des poulies ou engrenages crantés 9-2a et 9-2b en combinaison avec la courroie crantée 9-2c transmettant le mouvement de rotation du levier 9-1 pour créer un mouvement de rotation des bras 9-3 et 9-5, permet essentiellement de déplacer l'axe de rotation 9-4 du levier 9-1 au point le plus haut du dispositif afin de diminuer la longueur et l'angle de débattement du levier 9-1. Le levier 9-1 s'intègre alors plus facilement sur le dessus du dispositif.

L'insertion de la dosette 20 dans le compartiment 6 peut se faire manuellement en tombant par gravité ou à l'aide d'un système automatique à tiroir, poussoir ou carrousel.

Une dosette 20 sera constituée à partir d'une enveloppe 21 en papier filtre de 12 à 50 g/m² de grammage remplie de café, le poids de la dosette étant de 5 à 7 grammes. Le diamètre maximal de la dosette sera de 5 à 7 centimètres au niveau de la collerette, éventuellement jusqu'à 5,5 à 8 centimètres au niveau d'une languette 23 de préhension. La largeur maximale dans la dimension radiale de la collerette 22 au niveau de la languette 23 sera de 0,5 à 1 centimètre. L'épaisseur dans la direction axiale longitudinale perpendiculaire au plan diamétral de la dosette sera de 0,5 à 1 centimètre.

## Revendications

1. Dispositif de préparation de boisson aromatisée (1), notamment à base d'arômes de café, apte à extraire des arômes par infusion d'une dosette (20) de poudre en contenant, ladite dosette présentant une forme de pastille (21) plate ou ovoïde, remplie de ladite poudre, ledit dispositif étant apte à extraire les arômes contenus dans ladite poudre lorsque ladite dosette est traversée par un liquide, de préférence de l'eau sous pression, dans une chambre d'extraction, ledit dispositif comprenant :
- une première pièce (1-1) et une deuxième pièce (1-2) de même axe longitudinal (XX'), et
- des moyens de déplacement en translation et/ou rotation relative (9) horizontale coaxiale (XX') desdites première pièce (1-1) et deuxième pièce (1-2) entre :
- une position initiale d'ouverture ou éloignement maximal en translation et/ou rotation des deux première et deuxième pièces entre lesquelles se trouve une troisième pièce (4) délimitant un compartiment d'insertion initial (6) apte à recevoir ladite dosette, celle-ci pouvant être insérée par gravité dans ledit compartiment d'insertion ouvert en partie supérieure,
- une position de fermeture ou rapprochement maximal en translation et/ou rotation relative des deux première et deuxième pièces dans laquelle lesdites première et deuxième pièces délimitent un compartiment étanche, dénommé chambre d'extraction, à l'intérieur laquelle ladite pastille est apte à être comprimée pour réaliser une dite extraction, ladite troisième pièce comprenant un orifice (4b), de préférence en partie au moins circulaire, apte à être traversé par l'une au moins des deux première et deuxième pièces, et
- une position finale d'ouverture ou éloignement maximal en translation et/ou rotation des deux première et deuxième pièces entre lesquelles ladite troisième pièce délimite un compartiment d'évacuation (7) apte à recevoir ladite dosette après ladite extraction, ladite dosette pouvant être évacuée par gravité en dehors dudit compartiment d'éjection ouvert en partie inférieure,
**caractérisé en ce que** ladite troisième pièce est montée en pivotement par rapport à un axe transversal YY' perpendiculaire au dit axe longitudinal XX', apte à pivoter de manière synchronisée avec une dite translation et/ou rotation relative des deux première et deuxième pièces, tel que :
- le plan (P) dudit orifice (4b) est en position verticale et traversé par une dite première ou deuxième pièce lorsque lesdites première et deuxième pièces sont en dite position de fermeture, et
- le plan (P) dudit orifice (4b) est en position d'inclinaison maximale, de préférence d'un angle (α) de 10 à 30°, par rapport à un plan vertical transversal perpendiculaire audit axe longitudinal (XX') lorsque lesdites première et deuxième pièces sont en dites position d'ouverture initiale ou finale, et
- ladite troisième pièce présente une forme de berceau telle qu'en position inclinée (α), en dites positions d'ouverture initiale et finale, elle forme :
- un dit compartiment d'insertion (6) avec la face avant d'une dite première pièce (1-1) ou dite deuxième pièce (1-2), et
- un dit compartiment d'évacuation (7) avec la face avant (2) d'une dite deuxième pièce (1-2) ou respectivement dite première pièce (1-1), et
- ledit orifice (4b) de ladite troisième pièce comprend une surface périphérique avant (4a), apte à soutenir au moins dans sa partie inférieure (4-1) la partie périphérique bombée (24) de la pastille remplie de poudre (21) de ladite dosette en position inclinée dans ledit compartiment d'insertion, l'autre face (20a) de la dosette en périphérie bombée (24) de la partie pleine en forme de pastille (21) de ladite dosette en position inclinée dans ledit compartiment d'insertion étant en appui contre une partie inférieure de la face avant d'une dite première ou, respectivement, deuxième pièce.

2. Dispositif selon la revendication 1, **caractérisé en ce que** ladite troisième pièce (4) présente une inclinaison (α) identique dans la position d'insertion de la dosette et la position d'éjection de la dosette, et la rotation de ladite troisième pièce se fait automatiquement concomitamment au déplacement relatif en translation desdites première et deuxième pièces (1-1, 1-2), et la rotation de ladite troisième pièce comprend une étape de rotation entre la position inclinée (α) en dite position initiale d'insertion et une position verticale dans laquelle l'orifice (4b) de ladite troisième pièce est traversé par ladite première ou deuxième pièce après avoir été traversé par ladite partie pleine en forme de pastille (21) de ladite dosette (20).

3. Dispositif selon la revendication 1 ou 2, pour l'infusion d'une dite dosette comprenant une dite pastille entourée d'une collerette plate périphérique (22) s'étendant dans un plan axial de ladite pastille et apte à se plier par rapport au dit plan axial, ladite dosette présentant de préférence une section essentiellement circulaire dans ledit plan axial, **caractérisé en ce que** ladite collerette (22) est insérée entre la partie inférieure (4-1) de ladite troisième pièce et la partie inférieure de la face avant de ladite première pièce ou respectivement deuxième pièce la plus proche formant ledit compartiment d'insertion.

4. Dispositif selon la revendication 3, **caractérisé en ce qu'**il comporte :
a- une dite première pièce mâle (1-1) comprenant au moins une partie cylindrique (1-1a) formant un piston, et
b- une dite deuxième pièce femelle (1-2) comprenant un corps délimitant une chambre interne (5) à paroi cylindrique (5a) de même axe longitudinal (XX') que ledit piston, et
c- une dite troisième pièce montée à pivotement sur un châssis commun (1-3) supportant les trois pièces ou solidaire d'une des deux première et deuxième pièces (1-1, 1-2), et
d- des moyens de déplacement en translation relative (9) horizontale coaxiale (XX') desdites première pièce male (1-1) et deuxième pièce femelle (1-2) aptes à permettre une dite translation entre :
i- une dite position de fermeture étanche dans laquelle ladite partie cylindrique (1-1a) de ladite première pièce mâle (1-1) est située à l'intérieur de ladite chambre interne (5), délimitant un compartiment étanche, dénommé chambre d'extraction, à l'intérieur de ladite chambre interne (5), l'orifice de ladite troisième pièce en dite position verticale étant traversé par au moins ladite première pièce (1-1) en dite position de fermeture, et
ii- une dite position d'ouverture maximale dans laquelle :
• la face avant(2) de ladite première pièce male est écartée au maximum d'une surface avant (5-1) de l'ouverture de ladite chambre (5) de ladite deuxième pièce femelle, et
• ladite troisième pièce (4) en position inclinée forme un berceau dont ledit orifice (4b) est délimité sur sa face supérieure (4a), par une surface avant (4a), de préférence une surface tronconique avant (4a) au moins dans sa partie inférieure (4-1), ladite surface avant (4a) dudit berceau délimitant un dit compartiment d'insertion avec la face avant (2) de ladite première mâle (1-1), ledit orifice (4b) étant délimité sur sa face inférieure par une surface arrière (4c) dudit berceau , de préférence une surface arrière plane (4c) dudit berceau, délimitant un dit compartiment d'éjection (7) avec la surface avant (5-1) de l'ouverture de ladite chambre (5) de ladite première femelle, et
• ladite surface avant (4a) dudit berceau au moins dans sa partie inférieure (4-1) est apte à soutenir une face (20b) de la dosette en sous face de la périphérie bombée (24) de la partie pleine en forme de pastille (21) de ladite dosette lorsque celle-ci est insérée dans ledit compartiment d'insertion, l'autre face (20a) de la dosette en périphérie bombée (24) de la partie pleine en forme de pastille (21) de ladite dosette étant en appui contre la face avant (2) de la première pièce male lorsque ladite dosette est insérée dans ledit compartiment d'insertion, ladite collerette (22) de la dosette étant apte à être insérée dans un espace formant une fente (8) entre la partie inférieure (4-1) de la face avant dudit berceau et la partie inférieure de la face avant (2) de ladite première pièce male lorsque ladite dosette est insérée dans ledit compartiment d'insertion.

5. Dispositif selon la revendication 4, **caractérisé en ce qu'**il comporte :
a- une dite première pièce mâle fixe (1-1), et
b- une dite deuxième pièce femelle (1-2) apte à être déplacée en translation, et
c- une dite troisième pièce montée à pivotement sur ladite deuxième pièces femelle (1-2), ladite ouverture (5-1) de ladite chambre (5) étant dessous et en avant de l'axe (Y1Y1) de pivotement de ladite troisième pièce, ledit orifice (4b) de ladite troisième pièce étant apte à être traversé par ladite première pièce mâle et située en avant de ladite deuxième pièce en dite position de fermeture.

6. Dispositif selon l'une des revendications 4 ou 5, **caractérisé en ce que** ledit berceau forme un anneau dont l'orifice (4b) oblongue comporte en partie supérieure (4-2) une demie circonférence supérieure semi circulaire comportant une dite surface avant (4a) apte à soutenir continument la partie supérieure de ladite collerette et ledit orifice (4b) comporte en partie inférieure (4-1) une demie circonférence inférieure semi circulaire comportant une dite surface avant (4a) apte à soutenir continument la sous face de ladite pastille pleine (21) sur une de ses faces lorsque ledit berceau est en position inclinée en avant de l'ouverture (5-1) de ladite chambre interne (5), ledit orifice étant bordé sur une partie de sa hauteur par deux rebords latéraux (4-3) aptes à border latéralement ladite collerette et la maintenir coaxialement audit axe longitudinal (XX'), les deux parties supérieure (4-2) et inférieure (4-1) semi circulaires étant reliées entre elles par des parties rectilignes verticales (4-8) au niveau des dits rebords latéraux (4-3).

7. Dispositif selon l'une des revendications 4 à ,5 **caractérisé en ce que** ladite face avant (2) de la première pièce mâle (1-1) comporte :
- une surface de révolution périphérique (2-1) non cylindrique de même dit axe longitudinal (XX'), de préférence une surface tronconique, et
- une surface centrale (2-3) à circonférence circulaire de même dit axe longitudinal (XX'), de préférence une surface plane verticale, recouverte d'une première plaque perforée (18), et
- une surface de révolution intermédiaire (2-2) de même dit axe longitudinal (XX') entourant ladite surface centrale, de préférence une surface tronconique, ladite surface de révolution intermédiaire (2-2) présentant un diamètre croissant depuis ladite surface centrale (2-3) jusqu'à ladite surface de révolution périphérique (2-1), ladite surface de révolution périphérique étant de diamètre décroissant depuis sa circonférence maximale à son extrémité arrière (2-5) la plus proche de la paroi cylindrique (5a) de ladite chambre interne (5) en dite position de fermeture, jusqu'à son extrémité avant (2-4) constituant l'extrémité avant de ladite face avant (2) de la première pièce mâle (1-1), et
- en dite position de fermeture, ladite face avant (2) de la première pièce mâle (1-1) délimite avec la paroi interne cylindrique (5a) de ladite chambre interne (5), un logement périphérique (2a) apte à contenir la collerette pliée (22) par rapport au plan axial vertical perpendiculaire dudit axe longitudinal (XX') de ladite pastille, lorsque ladite pastille est dans ladite chambre d'extraction.

8. Dispositif selon l'une des revendications 4 à 7, **caractérisé en ce que** ladite première pièce mâle (1-1) comprend :
- une partie arrière (1-1a) creuse présentant une surface externe périphérique cylindrique, et
- une partie avant (1-1b) contenue en partie dans le creux (1-1d) de ladite partie arrière, ladite partie avant (1-1b) comprenant une dite face avant externe (2) non contenue dans ledit creux (1-1d) de ladite partie arrière, et
- ladite partie arrière (1-1a) étant reliée et/ou apte à coopérer avec ladite partie avant (1-1b), par un premier élément élastique, de préférence un premier ressort (1-1c), et
- un joint torique déformable (3) intercalé entre ladite partie arrière (1-1a) et ladite face avant (2) de ladite partie avant (1-1b), réalisant l'étanchéité de ladite chambre d'extraction lorsqu'on réalise une compression longitudinale contre ladite face avant (2) de la première pièce mâle par translation relative desdites première pièce mâle (1-1) et deuxième pièce femelle (1-2) en dite position de fermeture.

9. Dispositif selon l'une des revendications 4 à 8, **caractérisé en ce que** la deuxième pièce femelle (1-2) comprend une deuxième plaque (14) verticale, de préférence perforée, au sein de ladite chambre interne à paroi cylindrique (5a), d'un diamètre ajusté au diamètre interne d'un renfoncement ou logement creux (5c) au fond (5b) de ladite chambre interne, ladite deuxième plaque (14) étant apte à se déplacer en translation relative longitudinale par rapport à ladite chambre interne, entre :
i- le fond (5b) de la chambre interne, et
ii- une position d'évacuation à l'extérieur de ladite chambre interne, de préférence juste au niveau de l'ouverture (5-1) de ladite chambre, et
la translation relative de ladite deuxième plaque est apte à se synchroniser avec lesdits moyens de translation relative (9) desdites première pièce mâle (1-1) et deuxième pièce femelle (1-2) de telle sorte que :
i'- ladite deuxième plaque (14) puisse être positionnée en arrière dudit compartiment d'insertion (6), dans une première position d'ouverture constituant une position initiale d'insertion, puis être déplacée vers le fond (5c) de ladite chambre pendant une translation relative (9) de rapprochement de ladite deuxième pièce femelle par rapport à ladite première pièce mâle depuis ladite position d'ouverture et d'insertion jusqu'à une dite position de fermeture, et
ii'- ladite deuxième plaque (14) puisse être déplacée depuis le fond de ladite chambre vers l'extérieure de ladite chambre, de préférence au niveau de l'ouverture avant (5-1)l de ladite chambre après translation relative d'éloignement de ladite deuxième pièce femelle par rapport à ladite première pièce mâle depuis ladite position de fermeture jusqu'à une dite position d'ouverture et d'évacuation

10. Dispositif selon la revendication 9, **caractérisé en ce que** ladite deuxième pièce femelle (1-2) comprend en outre un élément de soutien et d'éjection (10) comprenant une deuxième plaque perforée (14) reliée à l'avant d'une tige (10b) traversant le fond (5b) de la chambre cylindrique (5), ladite tige (10b) et ladite deuxième plaque (14) étant apte à être bloqués en translation lorsque ladite deuxième pièce femelle (1-2) est déplacée en translation inverse depuis une dite position de fermeture vers une dite position d'ouverture et d'éjection du fait que l'extrémité arrière (10c) de ladite tige (10b) à l'extérieur à l'arrière de ladite pièce femelle est bloquée par une butée (9-6) disposée derrière ladite deuxième pièce femelle.

11. Dispositif selon l'une des revendications 4 à 10, **caractérisé en ce que** lesdits moyens de translation relative (9) sont aptes à déplacer ladite deuxième pièce femelle (1-2) mobile par rapport à une dite première pièce mâle fixe (1-1), ladite première pièce mâle étant fixée à un châssis (1-3), ledit châssis assurant le guidage (1-3a) en translation relative longitudinale coaxiale de la deuxième pièce femelle mobile par rapport à la ladite première pièce mâle fixe et le guidage en translation et rotation relative de ladite troisième pièce (4).

12. Dispositif selon la revendication 11, **caractérisé en ce que** ladite troisième pièce (4) est guidée en rotation par des éléments de guidage (4-6) solidaires de ladite troisième pièce et déplacée le long d'éléments de guidage complémentaires (1-3b, 1-3b1, 1-3b2) formant un chemin de guidage tel qu'un chemin rainuré non entièrement horizontal c'est-à-dire comportant au moins une partie (1-3b1) qui ne s'étend pas dans la direction horizontale axiale de translation relative desdites première et deuxième pièces, lesdits éléments de guidage complémentaires étant solidaires dudit châssis (1-3) et permettant de guider et de contrôler le pivotement de ladite troisième pièce lorsqu'on déplace en translation relative lesdites première et deuxième pièces.

13. Dispositif selon l'une des revendications 4 à 12, **caractérisé en ce que** lesdits moyens de translation relative comprennent un système de biellettes (9-3, 9-5) actionnable manuellement par un levier (9-1) ou de façon motorisée de préférence par un vérin (9-2), ledit système de biellettes assurant la liaison cinématique en translation de ladite deuxième pièce femelle par rapport à ladite première pièce mâle.

14. Procédé d'utilisation d'un dispositif selon l'une des revendications 1 à 13, **caractérisé en ce qu'**on réalise les étapes successives suivantes :
1- on insère par gravité une dite dosette en position inclinée dans un dit compartiment d'insertion (6), lesdites première pièce mâle (1-1) et deuxième pièce femelle (1-2) étant en dite position d'ouverture et d'insertion, une face (20a) de la dosette en périphérie bombée (24) de la partie pleine en forme de pastille (21) de ladite dosette étant en appui sur la partie inférieure de la surface avant (4a) de ladite troisième pièce, l'autre face (20a) de la dosette en périphérie bombée (24) de la partie pleine en forme de pastille (21) de ladite dosette étant en appui contre une partie inférieure de la face avant d'une dite première ou deuxième pièce, puis
2- on réalise une rotation et/ou translation relative de rapprochement des deux dites première pièce mâle (1-1) et deuxième pièce femelle (1-2) et une rotation puis translation de ladite troisième pièce, depuis ladite position d'insertion jusqu'à une dite position de fermeture étanche dans laquelle l'orifice de ladite troisième pièce en dite position verticale est traversé par l'une au moins des dites première et deuxième pièces, et ladite dosette (20) se trouve comprimé dans une dite chambre d'extraction étanche, puis
3- on réalise une injection de liquide à travers ladite dosette et évacuation dudit liquide de ladite chambre d'extraction, et
4- on réalise une translation et/ou rotation relative d'éloignement des deux dites première pièce mâle (1-1) et deuxième pièce femelle (1-2) à partir de ladite position de fermeture jusqu'à une dite position d'ouverture et d'évacuation, ladite troisième pièce en position verticale étant déplacée en translation puis en rotation en dite position inclinée, ladite dosette (20) étant déplacée dans un dit compartiment d'évacuation (7) dans lequel la dosette est évacuée par gravité.

15. Procédé d'utilisation selon la revendication 14, pour l'infusion d'une dite dosette comprenant une dite pastille entourée d'une collerette plate périphérique (22) s'étendant dans un plan axial de ladite pastille et apte à se plier par rapport au dit plan axial, **caractérisé en ce qu'**on réalise les étapes successives suivantes :
1- on insère par gravité une dite dosette avec sa collerette en position inclinée dans un dit compartiment d'insertion (6), lesdites première pièce mâle (1-1) et deuxième pièce femelle (1-2) étant en dite position d'ouverture et d'insertion, une face (20a) de la dosette en périphérie bombée (24) de la partie pleine en forme de pastille (21) de ladite dosette étant en appui sur la partie inférieure de la surface avant (4a) de ladite troisième pièce, l'autre face (20a) de la dosette en périphérie bombée (24) de la partie pleine en forme de pastille (21) de ladite dosette étant en appui contre une partie inférieure de la face avant de la première pièce male, ladite collerette (22) de la dosette étant insérée dans un espace formant une fente (8) entre la partie inférieure (4-1) de la face avant de ladite troisième pièce et la partie inférieure de la face avant (2) de ladite première pièce male lorsque ladite dosette est insérée dans ledit compartiment d'insertion, puis
2- on réalise une translation relative de rapprochement des deux dites première pièce mâle (1-1) et deuxième pièce femelle (1-2) et une rotation puis translation de ladite troisième pièce, depuis ladite position d'insertion jusqu'à une dite position de fermeture étanche dans laquelle l'orifice de ladite troisième pièce en dite position verticale est traversé par au moins ladite première pièce (1-1), et de préférence traversé par ladite partie pleine en forme de pastille (21) de ladite dosette et par ladite première pièce (1-1) et ladite dosette (20) se trouve plaquée et comprimée dans une dite chambre d'extraction étanche entre la face avant (2) de la première pièce mâle (1-1) et le fond de ladite chambre, puis
3- on réalise une injection de liquide à travers ladite dosette et évacuation de ladite chambre d'extraction, et
4- on réalise une translation relative d'éloignement des deux dites première pièce mâle (1-1) et deuxième pièce femelle (1-2) à partir de ladite position de fermeture jusqu'à une dite position d'ouverture et d'évacuation, ladite troisième pièce en position verticale étant déplacée en translation vers l'ouverture avant (5-1) de la chambre , puis en rotation en dite position inclinée (α), ladite dosette (20) étant déplacée depuis le fond de ladite chambre vers l'ouverture avant de ladite chambre dans un dit compartiment d'évacuation (7) dans lequel la dosette est évacuée par gravité.

## Patentansprüche

1. Vorrichtung zur Zubereitung eines aromatisierten Getränks (1), insbesondere auf der Basis von Kaffeearomen, die geeignet ist, Aromen durch Aufgießen einer Pulver enthaltenden Pulver-Kapsel (20) zu extrahieren, wobei die Kapsel eine Form eines flachen oder ovalen Pads (21) aufweist, das mit dem Pulver gefüllt ist, wobei die Vorrichtung geeignet ist, die in dem Pulver enthaltenen Aromen, wenn die Kapsel von einer Flüssigkeit, vorzugsweise von unter Druck befindlichem Wasser, durchlaufen wird, in einer Extraktionskammer zu extrahieren, wobei die Vorrichtung umfasst:
- ein erstes Teil (1-1) und ein zweites Teil (1-2) mit gleicher Längsachse (XX'), und
- Mittel zur koaxialen (XX'), horizontalen relativen Verschiebe- und/oder Drehbewegung des ersten Teils (1-1) und des zweiten Teils (1-2) zwischen:
- einer Ausgangsposition zum Öffnen oder maximalen Verschiebe- und/oder Drehentfernen der beiden ersten und zweiten Teile, zwischen denen sich ein drittes Teil (4) befindet, das ein Ausgangseinsetzfach (6) begrenzt, welches geeignet ist, die Kapsel aufzunehmen, wobei diese durch Schwerkraft in das im oberen Teil offene Einsetzfach eingesetzt werden kann,
- einer Position zum Verschließen oder maximalen relativen Verschiebe- und/oder Drehannähern der beiden ersten und zweiten Teile, in der das erste und das zweite Teil ein dichtes Fach, das als Extraktionskammer bezeichnet wird, begrenzen, in der das Pad zusammengedrückt werden kann, um eine Extraktion zu vollziehen, wobei das dritte Teil eine vorzugsweise wenigstens teilweise kreisförmige Öffnung (4b) aufweist, die geeignet ist, von wenigstens einem der beiden ersten und zweiten Teile durchgriffen zu werden, und
- einer Endposition zum Öffnen oder maximalen Verschiebe- und/oder Drehentfernen der beiden ersten und zweiten Teile, zwischen denen das dritte Teil ein Abführfach (7) begrenzt, das geeignet ist, die Kapsel nach der Extraktion aufzunehmen, wobei die Kapsel durch Schwerkraft aus dem im unteren Teil offenen Auswurffach abgeführt werden kann,
**dadurch gekennzeichnet, dass** das dritte Teil gegenüber einer zu der Längsachse XX' senkrechten Querachse YY' schwenkbar angebracht ist, geeignet ist, mit einer Relativverschiebung und/oder -drehung der beiden ersten und zweiten Teile synchron zu schwenken, derart, dass:
- die Ebene (P) der Öffnung (4b) sich in vertikaler Position befindet und von einem Teil, ersten oder zweiten, durchquert ist, wenn das erste und das zweite Teil sich in Schließposition befinden, und
- die Ebene (P) der Öffnung (4b) sich in der Position maximaler Neigung, vorzugsweise um einen Winkel (α) von 10 bis 30°, gegenüber einer zu der Längsachse (XX') senkrechten vertikalen Querebene befindet, wenn das erste und das zweite Teil sich in der Ausgangs- oder Endöffnungsposition befinden, und
- das dritte Teil eine Wiegenform aufweist, die derart ist, das es in der geneigten Position (α), in den Ausgangs- und Endöffnungspositionen:
- mit der Vorderseite eines ersten Teils (1-1) oder zweiten Teils (1-2) ein Einsetzfach (6) bildet und
- mit der Vorderseite (2) eines zweiten Teils (1-2) bzw. ersten Teils (1-1) ein Abführfach (7) bildet, und
- die Öffnung (4b) des dritten Teils eine vordere Umfangsfläche (4a) aufweist, die geeignet ist, wenigstens in ihrem unteren Teil (4-1) den gewölbten Umfangsteil (24) des mit Pulver gefüllten Pads (21) der Kapsel in geneigter Position in dem Einsetzfach zu stützen, wobei die andere Seite (20a) der Kapsel am gewölbten Umfang (24) des massiven, Pad-förmigen Teils (21) der Kapsel in geneigter Position in dem Einsetzfach an einem unteren Teil der Vorderseite eines ersten bzw. zweiten Teils in Anlage ist.

2. Vorrichtung nach Anspruch 1, **dadurch gekennzeichnet, dass** das dritte Teil (4) eine gleiche Neigung (α) in der Einsetzposition der Kapsel und der Auswurfposition der Kapsel aufweist, und die Rotation des dritten Teils gleichzeitig mit der Relativverschiebebewegung des ersten und des zweiten Teils (1-1, 1-2) automatisch erfolgt, und die Rotation des dritten Teils einen Schritt eines Drehens zwischen der in Ausgangseinsetzposition geneigten Position (α) und einer vertikalen Position umfasst, in der die Öffnung (4b) des dritten Teils von dem ersten oder dem zweiten Teil durchgriffen ist, nachdem sie von dem massiven, Pad-förmigen Teil (21) der Kapsel (20) durchgriffen worden ist.

3. Vorrichtung nach Anspruch 1 oder 2, für das Aufgießen einer Kapsel, die ein Pad umfasst, das von einem flachen Umfangskragen (22) umgeben ist, der sich in einer Axialebene des Pads erstreckt und geeignet ist, sich gegenüber der Axialebene zu biegen, wobei die Kapsel vorzugsweise einen im Wesentlichen kreisförmigen Querschnitt in der Axialebene aufweist, **dadurch gekennzeichnet, dass** der Kragen (22) zwischen dem unteren Teil (4-1) des dritten Teils und dem unteren Teil der Vorderseite des nächstgelegenen ersten Teils bzw. zweiten Teils, die das Einsetzfach bilden, eingesetzt ist.

4. Vorrichtung nach Anspruch 3, **dadurch gekennzeichnet, dass** sie umfasst:
a- ein erstes männliches Teil (1-1) mit wenigstens einem einen Kolben bildenden zylindrischen Teil (1-1a), und
b- ein zweites weibliches Teil (1-2) mit einem Körper, der eine Innenkammer (5) mit zylindrischer Wand (5a) mit gleicher Längsachse (XX') wie der Kolben begrenzt, und
c- ein drittes Teil, das an einem gemeinsamen Rahmen (1-3), welcher die drei Teile trägt oder mit einem der beiden ersten und zweiten Teile (1-1, 1-2) fest verbunden ist, schwenkbar angebracht ist, und
d- Mittel zum koaxialen (XX'), horizontalen relativen Verschiebebewegen (9) des ersten männlichen Teils (1-1) und des zweiten weiblichen Teils (1-2), die geeignet sind, eine Verschiebung zuzulassen zwischen:
i- einer dichten Schließposition, in der sich der zylindrische Teil (1-1a) des ersten männlichen Teils (1-1) innerhalb der Innenkammer (5) befindet und ein als Extraktionskammer bezeichnetes dichtes Fach innerhalb der Innenkammer (5) begrenzt, wobei die Öffnung des dritten Teils in der vertikalen Position von wenigstens dem ersten Teil (1-1) in Schließposition durchgriffen ist und
ii. einer Position maximaler Öffnung, in der:
• die Vorderseite (2) des ersten männlichen Teils von einer vorderen Fläche (5-1) der Öffnung der Kammer (5) des zweiten weiblichen Teil maximal entfernt ist, und
• das dritte Teil (4) in geneigter Position eine Wiege bildet, deren Öffnung (4b) an ihrer Oberseite (4a) durch eine vordere Fläche (4a), vorzugsweise eine vordere kegelstumpfförmige Fläche (4a) wenigstens in ihrem unteren Teil (4-1) begrenzt ist, wobei die vordere Fläche (4a) der Wiege mit der Vorderseite (2) des ersten Männlichen (1-1) ein Einsetzfach bildet, wobei die Öffnung (4b) an ihrer Unterseite durch eine hintere Fläche (4c) der Wiege, vorzugsweise eine ebene hintere Fläche (4c) der Wiege begrenzt ist, die mit der vorderen Fläche (5-1) der Öffnung der Kammer (5) des ersten Weiblichen ein Auswurffach (7) begrenzt, und
• die vordere Fläche (4a) der Wiege wenigstens in ihrem unteren Teil (4-1) geeignet ist, eine Seite (20b) der Kapsel an der Unterseite des gewölbten Umfangs (24) des massiven, Pad-förmigen Teils (21) der Kapsel zu stützen, wenn diese in das Einsetzfach eingesetzt ist, wobei die andere Seite (20a) der Kapsel an dem gewölbten Umfang (24) des massiven, Pad-förmigen Teils (21) der Kapsel an der Vordeseite (2) des ersten männlichen Teils in Anlage ist, wenn die Kapsel in das Einsetzfach eingesetzt ist, wobei der Kragen (22) der Kapsel geeignet ist, in einen Raum, welcher einen Schlitz (8) zwischen dem unteren Teil (4-1) der Vorderseite der Wiege und dem unteren Teil der Vorderseite (2) des ersten männlichen Teils bildet, eingesetzt zu werden, wenn die Kapsel in das Einsetzfach eingesetzt ist.

5. Vorrichtung nach Anspruch 4, **dadurch gekennzeichnet, dass** sie umfasst:
a- ein festes erstes männliches Teil (1-1) und
b- ein zweites weibliches Teil (1-2), das geeignet ist, verschiebebewegt zu werden, und
c- ein drittes Teil, das an dem zweiten weiblichen Teil (1-2) schwenkbar angebracht ist, wobei die Öffnung (5-1) der Kammer (5) unter und vor der Schwenkachse (Y1Y1) des dritten Teils gelegen ist, wobei die Öffnung (4b) des dritten Teils geeignet ist, von dem ersten männlichen und vor dem zweiten Teil gelegenen Teil in der Schließposition durchgriffen zu werden.

6. Vorrichtung nach einem der Ansprüche 4 oder 5, **dadurch gekennzeichnet, dass** die Wiege einen Ring bildet, dessen längliche Öffnung (4b) im oberen Teil (4-2) einen oberen, halbkreisförmigen Halbumfang umfasst, der eine vordere Fläche (4a) aufweist, welche geeignet ist, den oberen Teil des Kragens durchgehend zu stützen, und die Öffnung (4b) im unteren Teil (4-1) einen unteren, halbkreisförmigen Halbumfang umfasst, der eine vordere Fläche (4a) aufweist, die geeignet ist, die Unterseite des massiven Pads (21) an einer seiner Seiten durchgehend zu stützen, wenn die Wiege sich in geneigter Position vor der Öffnung (5-1) der Innenkammer (5) befindet, wobei die Öffnung über einen Teil ihrer Höhe durch zwei Seitenränder (4-3) gesäumt ist, die geeignet sind, den Kragen seitlich einzufassen und ihn zu der Längsachse (XX') koaxial zu halten, wobei die beiden halbkreisförmigen Teile, der obere (4-2) und der untere (4-1), durch geradlinige vertikale Teile (4-8) im Bereich der Seitenränder (4-3) untereinander verbunden sind.

7. Vorrichtung nach einem der Ansprüche 4 bis 5, **dadurch gekennzeichnet, dass** die Vorderseite (2) des ersten männlichen Teils (1-1) umfasst:
- eine nicht zylindrische Umfangsrotationsfläche (2-1) mit gleicher Längsachse (XX'), vorzugsweise eine Kegelstumpffläche, und
- eine mittlere Fläche (2-3) mit kreisförmigem Umfang mit gleicher Längsachse (XX'), vorzugsweise eine ebene, vertikale Fläche, die von einer ersten Siebplatte (18) bedeckt ist, und
- eine Zwischenrotationsfläche (2-2) mit gleicher Längsachse (XX'), welche die mittlere Fläche umgibt, vorzugsweise eine Kegelstumpffläche, wobei die Zwischenrotationsfläche (2-2) einen von der mittleren Fläche (2-3) bis zu der Umfangsrotationsfläche (2-1) zunehmenden Durchmesser aufweist, wobei die Umfangsrotationsfläche einen Durchmesser aufweist, der von ihrem maximalen Umfang an ihrem hinteren Ende (2-5), das der zylindrischen Wand (5a) der Innenkammer (5) in der Schließposition am nächsten gelegen ist, bis zu ihrem vorderen Ende (2-4), das das vordere Ende der Vorderseite (2) des ersten männlichen Teils (1-1) bildet, abnimmt, und
- in der Schließposition die Vorderseite (2) des ersten männlichen Teils (1-1) mit der zylindrischen Innenwand (5a) der Innenkammer (5) eine Umfangsaufnahme (2a) begrenzt, die geeignet ist, den gegenüber der senkrechten vertikalen Axialebene der Längsachse (XX') des Pads gebogenen Kragen (22) zu enthalten, wenn das Pad in der Extraktionskammer ist.

8. Vorrichtung nach einem der Ansprüche 4 bis 7, **dadurch gekennzeichnet, dass** das erste männliche Teil (1-1) umfasst:
- einen hohlen hinteren Teil (1-1 a), der eine zylindrische Umfangsaußenfläche aufweist, und
- einen vorderen Teil (1-1b), der in dem Hohlraum (1-1d) des hinteren Teils teilweise enthalten ist, wobei der vordere Teil (1-1b) eine äußere Vorderseite (2) umfasst, die nicht in dem Hohlraum (1-1d) des hinteren Teils enthalten ist, und
- wobei der hintere Teil (1-1 a) über ein erstes elastisches Element, vorzugsweise eine erste Feder (1-1c), mit dem vorderen Teil (1-1b) verbunden ist und/oder geeignet ist, mit ihm zusammenzuwirken, und
- einen verformbaren Dichtring (3), der zwischen dem hinteren Teil (1-1a) und der Vorderseite (2) des vorderen Teils (1-1b) eingefügt ist und die Dichtigkeit der Extraktionskammer sicherstellt, wenn ein Längskomprimieren gegen die Vorderseite (2) des ersten männlichen Teils durch Relativverschieben des ersten männlichen Teils (1-1) und des zweiten weiblichen Teils (1-2) in der Schließposition vollzogen wird.

9. Vorrichtung nach einem der Ansprüche 4 bis 8, **dadurch gekennzeichnet, dass** das zweite weibliche Teil (1-2) eine vorzugsweise gelochte zweite vertikale Platte (14) innerhalb der Innenkammer mit zylindrischer Wand (5a), mit einem Durchmesser, welcher dem Innendurchmesser einer Vertiefung oder hohlen Aufnahme (5c) am Boden (5b) der Innenkammer angepasst ist, umfasst, wobei die zweite Platte (14) geeignet ist, sich gegenüber der Innenkammer längsrelativverschieblich zu bewegen zwischen:
i- dem Boden (5b) der Innenkammer und
ii- einer Abführposition außerhalb der Innenkammer, vorzugsweise genau im Bereich der Öffnung (5-1) der Kammer, und
die Relativverschiebung der zweiten Platte geeignet ist, mit den Mitteln zum Relativverschieben (9) des ersten männlichen Teils (1-1) und des zweiten weiblichen Teils (1-2) derart synchron abzulaufen, dass:
i'- die zweite Platte (14), in einer ersten Öffnungsposition, die eine Ausgangseinsetzposition bildet, hinter dem Einsetzfach (6) angeordnet werden kann, dann bei einer Relativverschiebung (9) zum Annähern des zweiten weiblichen Teils gegenüber dem ersten männlichen Teil von der Öffnungs- und Einsetzposition bis zu einer Schließposition, in Richtung des Bodens (5c) der Kammer bewegt werden kann, und
ii'- die zweite Platte (14) von dem Boden der Kammer zur Außenseite der Kammer bewegt werden kann, vorzugsweise im Bereich der vorderen Öffnung (5-1) der Kammer, nach einer Relativverschiebung zum Entfernen des zweiten weiblichen Teils gegenüber dem ersten männlichen Teil von der Schließposition bis zu einer Öffnungs- und Abführposition.

10. Vorrichtung nach Anspruch 9, **dadurch gekennzeichnet, dass** das zweite weibliche Teil (1-2) ferner ein Stütz- und Auswurfelement (10) umfasst, das eine zweite Siebplatte (14) umfasst, welche mit dem vorderen Teil einer den Boden (5b) der zylindrischen Kammer (5) durchgreifenden Stange (10b) verbunden ist, wobei die Stange (10b) und die zweite Platte (14) geeignet sind, gegen ein Verschieben festgelegt zu werden, wenn das zweite weibliche Teil (1-2) von einer Schließposition in Richtung einer Öffnungs- und Auswurfposition umgekehrt verschiebebewegt wird aufgrund der Tatsache, dass das hintere Ende (10c) der Stange (10b) außerhalb auf der Rückseite des weiblichen Teils an einem Anschlag (9-6), welcher hinter dem zweiten weiblichen Teil angeordnet ist, blockiert ist.

11. Vorrichtung nach einem der Ansprüche 4 bis 10, **dadurch gekennzeichnet, dass** die Relativverschiebemittel (9) geeignet sind, das bewegliche zweite weibliche Teil (1-2) gegenüber einem festen ersten männlichen Teil (1-1) zu bewegen, wobei das erste männliche Teil an einem Rahmen (1-3) befestigt ist, wobei der Rahmen die koaxiale Längsrelativverschiebeführung (1-3a) des beweglichen zweiten weiblichen Teils (1-2) gegenüber dem festen ersten männlichen Teil und die Relativverschiebe- und - drehführung des dritten Teils (4) sicherstellt.

12. Vorrichtung nach Anspruch 11, **dadurch gekennzeichnet, dass** das dritte Teil (4) durch Führungselemente (4-6), die mit dem dritten Teils fest verbunden sind, drehgeführt ist und entlang von ergänzenden Führungselementen (1-3b, 1-3b1, 1-3b2) bewegt wird, die einen Führungsweg, wie einen genuteten, nicht vollständig horizontalen Weg, das heißt mit wenigstens einem Teil (1-3b1), der nicht in der horizontalen axialen Relativverschieberichtung des ersten und des zweiten Teils verläuft, bilden, wobei die ergänzenden Führungselemente mit dem Rahmen (1-3) fest verbunden sind und ermöglichen, das Verschwenken des dritten Teils zu führen und zu steuern, wenn das erste und das zweite Teil relativ verschiebebewegt werden.

13. Vorrichtung nach einem der Ansprüche 4 bis 12, **dadurch gekennzeichnet, dass** die Relativverschiebemittel ein Stangensystem (9-3, 9-5) umfassen, das manuell durch einen Hebel (9-1) oder motorisiert vorzugsweise über einen Zylinder (9-2) betätigbar ist, wobei das Stangensystem die kinematische Verschiebeverbindung des zweiten weiblichen Teils gegenüber dem ersten männlichen Teil sicherstellt.

14. Verfahren zur Verwendung einer Vorrichtung nach einem der Ansprüche 1 bis 13, **dadurch gekennzeichnet, dass** die folgenden aufeinanderfolgenden Schritte durchgeführt werden:
1- eine Kapsel wird in geneigter Position in ein Einsetzfach (6) mittels Schwerkraft eingesetzt, wobei das erste männliche Teil (1-1) und das zweite weibliche Teil (1-2) sich in Öffnungs- und Einsetzposition befinden, wobei eine Seite (20a) der Kapsel am gewölbten Umfang (24) des massiven, Pad-förmigen Teils (21) der Kapsel an dem unteren Teil der vorderen Fläche (4a) des dritten Teils in Anlage ist, wobei die andere Seite (20a) der Kapsel am gewölbten Umfang (24) des massiven, Pad-förmigen Teils (21) der Kapsel an einem unteren Teil der Vorderseite eines ersten oder zweiten Teils in Anlage ist, und
2- ein Relativdrehen und/oder -verschieben zum Annähern der beiden Teile, des ersten männlichen (1-1) und des zweiten weiblichen (1-2), sowie ein Drehen, dann Verschieben des dritten Teils, von der Einsetzposition bis zu einer dichten Schließposition vollzogen wird, in der die Öffnung des dritten Teils in vertikaler Position von wenigstens einem der ersten und zweiten Teile durchgriffen wird und die Kapsel (20) sich in einer dichten Extraktionskammer zusammengedrückt befindet, dann
3- ein Einspritzen von Flüssigkeit durch die Kapsel und Abführen der Flüssigkeit aus der Extraktionskammer vollzogen wird, und
4- ein Relativverschieben und/oder -drehen zum Entfernen der beiden Teile, des ersten männlichen (1-1) und des zweiten weiblichen (1-2), von der Schließstellung aus bis zu einer Öffnungs- und Abführposition vollzogen wird, wobei das dritte Teil in vertikaler Position verschiebend, dann drehend in die geneigte Position bewegt wird, wobei die Kapsel (20) in ein Abführfach (7) bewegt wird, aus dem die Kapsel mittels Schwerkraft abgeführt wird.

15. Verwendungsverfahren nach Anspruch 14, für das Aufgießen einer Kapsel, die ein Pad umfasst, welches von einem flachen Umfangskragen (22) umgeben ist, der in einer Axialebene des Pads verläuft und geeignet ist, sich gegenüber der Axialebene zu biegen, **dadurch gekennzeichnet, dass** die folgenden aufeinanderfolgenden Schritte durchgeführt werden:
1- eine Kapsel mit ihrem Kragen in geneigter Position wird in ein Einsetzfach (6) mittels Schwerkraft eingesetzt, wobei das erste männliche Teil (1-1) und das zweite weibliche Teil (1-2) sich in Öffnungs- und Einsetzposition befinden, wobei eine Seite (20a) der Kapsel am gewölbten Umfang (24) des massiven, Pad-förmigen Teils (21) der Kapsel an dem unteren Teil der vorderen Fläche (4a) des dritten Teils in Anlage ist, wobei die andere Seite (20a) der Kapsel am gewölbten Umfang (24) des massiven, Pad-förmigen Teils (21) der Kapsel an einem unteren Teil der Vorderseite des ersten männlichen Teils in Anlage ist, wobei der Kragen (22) der Kapsel in einen Raum, welcher einen Schlitz (8) zwischen dem unteren Teil (4-1) der Vorderseite des dritten Teils und dem unteren Teil der Vorderseite (2) des ersten männlichen Teils bildet, eingesetzt ist, wenn die Kapsel in das Einsetzfach eingesetzt ist, dann
2- ein Relativverschieben zum Annähern der beiden Teile, des ersten männlichen (1-1) und des zweiten weiblichen (1-2), sowie ein Drehen, dann Verschieben des dritten Teils, von der Einsetzposition bis zu einer dichten Schließposition vollzogen wird, in der die Öffnung des dritten Teils in vertikaler Position von wenigstens dem ersten Teil (1-1) durchgriffen wird und vorzugsweise von dem massiven, Pad-förmigen Teil (21) der Kapsel und von dem ersten Teil (1-1) durchgriffen wird, und die Kapsel (20) in eine dichte Extraktionskammer zwischen die Vorderseite (2) des ersten männlichen Teils (1-1) und den Boden der Kammer gedrückt und hierin zusammengedrückt wird, dann
3- ein Einspritzen von Flüssigkeit durch die Kapsel und Abführen aus der Extraktionskammer vollzogen wird, und
4- ein Relativverschieben zum Entfernen der beiden Teile, des ersten männlichen (1-1) und des zweiten weiblichen (1-2), von der Schließstellung aus bis zu einer Öffnungs- und Abführposition vollzogen wird, wobei das dritte Teil in vertikaler Position verschiebend in Richtung der vorderen Öffnung (5-1) der Kammer, dann drehend in die geneigte Position (α) bewegt wird, wobei die Kapsel (20) von dem Boden der Kammer in Richtung der vorderen Öffnung der Kammer in ein Abführfach (7) bewegt wird, aus dem die Kapsel mittels Schwerkraft abgeführt wird.

## Claims

1. A device for preparing an aromatized beverage (1), notably based on coffee aromas, capable of extracting aromas by infusion of a powder pod (20) containing them, said pod having a flat or ovoid pastille shape (21), filled with said powder, said device being capable of extracting the aromas contained in said powder when said pod is crossed by a liquid, preferably pressurized water, in an extraction chamber, said device comprising:
- a first part (1-1) and a second part (1-2) of a same longitudinal axis (XX'), and
- means (9) for coaxial horizontal relative rotation and/or translation (XX') of said first part (1-1) and second part (1-2) between:
- an initial opening position or of maximum separation in translation and/or in rotation of both first and second parts between which is found a third part (4) delimiting an initial insertion compartment (6) capable of receiving said pod, the latter may be inserted by gravity into said insertion compartment, open in the upper portion,
- a closing position or of minimum separation in relative translation and/or rotation of both first and second parts in which said first and second parts delimit a sealed compartment, called an extraction chamber, inside which said pastille is able to be compressed for producing a said extraction, said third part comprising a preferably partly at least circular orifice (4b), able to be crossed by at least one of both first and second parts, and
- a final opening position or of maximum separation in translation and/or rotation of both first and second parts between which said third part delimits a discharge compartment (7) capable of receiving said pod after said extraction, said pod may be discharged by gravity out of said discharge compartment, open in the lower portion,
**characterized in that** said third part is pivotally mounted relatively to a transverse axis YY' perpendicular to said longitudinal axis XX', capable of pivoting in a synchronized way with a said relative translation and/or rotation of both first and second parts, such that:
- the plane (P) of said orifice (4b) is in a vertical position and crossed by a said first or second part when said first and second parts are in a said closing position, and
- the plane (P) of said orifice (4b) is in a maximum tilted position, preferably by an angle (α) from 10 to 30°, relatively to a transverse vertical plane perpendicular to said longitudinal axis (XX') when said first and second parts are in said initial or final open positions, and
- said third part has a cradle shape such that in a tilted position (α), in said initial and final open positions, it forms:
- a said insertion compartment (6) with a front face of a said first part (1-1) or a said second part (1-2), and
- a said discharge compartment (7) with a front face (2) of a said second part (1-2) or respectively a said first part (1-1), and
- said orifice (4b) of said third part comprises a front peripheral surface (4a) able to support at least in its lower portion (4-1) a convex peripheral portion (24) of the pastille full of powder (21) of said pod in a tilted position in said insertion compartment, the other face (20a) of the pod in a convex periphery (24) of the solid portion with a pastille (21) shape of said pod in a tilted position in said insertion compartment bearing against a lower portion of a front face of a said first or respectively second part.

2. The device according to claim 1, **characterized in that** said third part (4) has an identical tilt (α) in the insertion position of the pod and the ejection position of the pod, and the rotation of said third part is accomplished automatically concomitantly with the relative translation displacement of said first and second part (1-1, 1-2), and the rotation of said third part comprises a rotation step between the tilted position (α) in the said initial insertion position and a vertical position in which the orifice (4b) of said third part is crossed by said first or second part after having been crossed by said pastille-shaped solid portion (21) of said pod (20).

3. The device according to claim 1 or 2, for infusion of a said pod comprising a said pastille surrounded by a peripheral flat flange (22) extending in an axial plane of said pastille and capable of being folded relatively to said axial plane, said pod preferably having an essentially circular section in said axial plane, **characterized in that** said flange (22) is inserted between the lower portion (4-1) of said third part and the lower portion of the front face of said first part or respectively the closest second part forming said insertion compartment.

4. The device according to claim 3, **characterized in that** it includes:
a- a said first male part (1-1) comprising at least one cylindrical portion (1-1a) forming a piston, and
b- a said second female part (1-2) comprising a body delimiting an internal chamber (5) with a cylindrical wall (5a) of a same longitudinal axis (XX') as said piston, and
c- a said third part pivotally mounted on a common chassis (1-3) supporting the three parts or secured to one of both first and second parts (1-1, 1-2), and
d- means for coaxial horizontal relative translational displacement (9) (XX') of said first male part (1-1) and second female part (1-2) capable of allowing a said translation between:
i- a said sealed closing position in which said cylindrical portion (1-1a) of said first male part (1-1) is located inside said internal chamber (5) delimiting a sealed compartment called an extraction chamber, inside said internal chamber (5), the orifice of said third part in a said vertical position being crossed by at least said first part (1-1) in the said closing position, and
ii- a said maximum separation position in which:
• front face (2) of said first male part is at maximum separation from a front surface (5-1) of an aperture of said chamber (5) of said second female part, and
• said third part (4) in a tilted position forms a cradle, said orifice (4b) of which is delimited on its upper face (4a) by a front surface (4a), preferably a front frusto-conical surface (4a) at least in its lower portion (4-1), said front surface (4a) of said cradle delimiting a said insertion compartment with the front face (2) of said first male part (1-1), said orifice (4b) being delimited on its lower face by a rear surface (4c) of said cradle, preferably a planar rear surface (4c) of said cradle, delimiting a said discharge compartment (7) with the front surface (5-1) of the aperture of said chamber (5) of said first female part, and
• said front surface (4a) of said cradle at least in its lower portion (4-1) is able to support a face (20b) of the pod in a sub-face of the convex periphery (24) of the pastille-shaped solid portion (21) of said pod when the latter is inserted into said insertion compartment, the other face (20a) of the pod in the convex periphery (24) of the pastille-shaped solid portion (21) of said pod bearing against the front face (2) of the first male part when said pod is inserted into said insertion compartment, said flange (22) of the pod being able to be inserted into a space forming a slot (8) between the lower portion (4-1) of the front face of said cradle and the lower portion of the front face (2) of said first male part when said pod is inserted into said insertion compartment.

5. The device according to claim 4, **characterized in that** it includes:
a- a said first fixed male part (1-1), and
b- a said second female part (1-2) able to be displaced in translation, and
c- a said third part pivotally mounted on said second female part (1-2), said aperture (5-1) of said chamber (5) being below and in front of a pivot axis (Y1Y1) of said third part, said orifice (4b) of said third part being able to be crossed by said first male part and located in front of said second part in said closing position.

6. The device according to one of claims 4 or 5, **characterized in that** said cradle forms a ring, the oblong orifice (4b) of which includes in an upper portion (4-2) a semi-circular upper half-circumference including a said front surface (4a) capable of continuously supporting the upper portion of said flange and said orifice (4b) includes in a lower portion (4-1) a semi-circular lower half-circumference including a said front face (4a) capable of continuously supporting the sub-face of said solid pastille (21) on one of its faces when said cradle is in a tilted position in front of the aperture (5-1) of said internal chamber (5), said orifice being bordered on one portion of its height by two side edges (4-3) capable of laterally bordering said flange and maintaining it coaxial with said longitudinal axis (XX'), both semi-circular upper (4-2) and lower (4-1) portions being connected together by vertical rectilinear portions (4-8) at said side edges (4-3).

7. The device according to one of the claims 4 to 5, **characterized in that** said front face (2) of the first male part (1-1) includes:
- a non-cylindrical peripheral axisymmetrical surface of revolution(2-1) about said longitudinal axis (XX'), preferably a frusto-conical surface, and
- a central surface (2-3) with a circular circumference of same said longitudinal axis (XX'), preferably a vertical planar surface covered with a first perforated plate (18), and
- an intermediate axisymmetrical surface of revolution(2-2) about the same said longitudinal axis (XX') surrounding said central surface, preferably a frusto-conical surface, said intermediate axisymmetrical surface of revolution(2-2) having an increasing diameter from said central surface (2-3) and to as far as said peripheral axisymmetrical surface of revolution(2-1), said peripheral axisymmetrical surface of revolution having a decreasing diameter from its maximum circumference to its closest rear end (2-5) to the cylindrical wall (5a) of said internal chamber (5) in a said closing position, to as far as its front end (2-4) forming the front end of said front face (2) of the first male part (1-1), and
- in said closing position, said front face (2) of the first male part (1-1) delimits with the cylindrical internal wall (5a) of said internal chamber (5), a peripheral housing (2a) able to contain the folded flange (22) relatively to the vertical axial plane perpendicular to said longitudinal axis (XX') of said pastille, when said pastille is in said extraction chamber.

8. The device according to one of claims 4 to 7, **characterized in that** said first male part (1-1) comprises:
- a recessed rear portion (1-1a) having a cylindrical peripheral external surface, and
- a front portion (1-1b) partly contained in the recess (1-1d) of said rear portion, said front portion (1-1b) comprising a said external front face (2) not contained in said recess (1-1d) of said rear portion, and
- said rear portion (1-1a) being connected and/or able to cooperate with said front portion (1-1b), through a first elastic element, preferably a first spring (1-1c), and
- a deformable O-ring (3) inserted between said rear portion (1-1a) and said front face (2) of said front portion (1-1b), producing the seal of said extraction chamber when a longitudinal compression is exerted against said front face (2) of the first male part by relative translation of said first male part (1-1) and second female part (1-2) in said closing position.

9. The device according to one of claims 4 to 8, **characterized in that** said female part (1-2) comprises a second vertical, preferably perforated plate (14) within said internal chamber with a cylindrical wall (5a), with a diameter adjusted to the internal diameter of a recessed housing (5c) at a bottom (5b) of said internal chamber, said second plate (14) being able to be moved in longitudinal relative translation relatively to said internal chamber, between:
i- the bottom (5b) of the internal chamber, and
ii- a discharge position outside said internal chamber, preferably just in front of the aperture (5-1) of said chamber, and
the relative translation of said second plate is able to be synchronized with said relative translation means (9) of said first male part (1-1) and second female part (1-2) so that:
i'- said second plate (14) may be positioned in the rear of said insertion compartment (6), in an initial opening position forming an initial insertion position, and then be moved towards the bottom (5c) of said chamber during a relative translation (9) for bringing said second female part closer to said first male part from said opening and insertion position to as far as a said closing position, and
ii'- said second plate (14) may be moved from the bottom of said chamber to the outside of said chamber, preferably at the front aperture (5-1) of said chamber after relative translation for moving said second female part away from said first male part from said closing position to as far as a said opening and discharge position.

10. The device according to claim 9, **characterized in that** said second female part (1-2) further comprises a supporting and ejection element (10) comprising a second perforated plate (14) connected to the front of a rod (10b) crossing the bottom (5b) of the cylindrical chamber (5), said rod (10b) and said second plate (14) being able to be blocked in translation when said second female part (1-2) is moved in reverse translation from a said closing position to a said opening and discharge position because the rear portion (10c) of said rod (10b) on the outside, at the rear of said female part, is blocked by an abutment (9-6) positioned behind said second female part.

11. The device according to one of claims 4 to 10, **characterized in that** said relative translation means (9) are able to move said moveable second female part (1-2) relatively to a said first fixed male part (1-1), said first male part being attached to a chassis (1-3), said chassis ensuring the guiding (1-3a) in coaxial longitudinal relative translation of the second moveable female part relatively to said first fixed male part and the guiding in relative translation and rotation of said third part (4).

12. The device according to claim 11, **characterized in that** said third part (4) is guided in rotation by guiding elements (4-6) secured to said third part and moved along additional guiding elements (1-3b, 1-3b1, 1-3b2) forming a guide path being a non-entirely horizontal grooved path, i.e. including at least one portion (1-3b1) which does not extend in the axial horizontal direction of relative translation of said first and second parts, said additional guiding elements being secured to said chassis (1-3) and allowing the pivoting of said third part to be guided and controlled when said first and second parts are moved in relative translation.

13. The device according to one of claims 4 to 12, **characterized in that** said relative translation means comprise a system of connecting rods (9-3, 9-5) which may be manually actuated by a lever (9-1) or in a motor-driven way preferably by a cylinder (9-2), said system of connecting rods ensuring a kinematic connection in translation of said second female part relatively to said first male part.

14. A method for using a device according to one of claims 1 to 13, **characterized in that** the following successive steps are carried out:
1- a said pod in a tilted position is inserted by gravity into a said insertion compartment (6), said first male part (1-1) and second female part (1-2) being in a said opening and insertion position, one face (20a) of the pod in the convex periphery (24) of the pastille-shaped solid portion (21) of said pod bearing upon the lower portion of the front surface (4a) of said third part, the other face (20a) of the pod in the convex
periphery (24) of the pastille-shaped solid portion (21) of said pod bearing against a lower portion of the front face of a said first or second part, and then
2- relative rotation and/or translation is performed for bringing closer both said first male part (1-1) and second female part (1-2) followed by rotation and then translation of said third part, from said insertion position to as far as a said sealed closing position in which the orifice of said third part in said vertical position is crossed by at least one of said first and second parts, and said pod (20) is compressed in a said sealed extraction chamber, and then
3- injection of liquid through said pod and discharge of said liquid from said extraction chamber are carried out, and
4- a relative translation and/or rotation is performed for moving away both said first male part (1-1) and second female part (1-2) from said closing position to as far as a said opening and discharge position, said third part in a vertical position being displaced in translation and then in rotation in said tilted position, said pod (20) being moved into a said discharge compartment (7) in which the pod is discharged by gravity.

15. The method for use according to claim 14, for infusion of a said pod comprising a said pastille surrounded by a peripheral flat flange (22) extending in an axial plane of said pastille and able to be folded relatively to said axial plane, **characterized in that** the following successive steps are carried out:
1- a said pod with its flange in a tilted position is inserted by gravity into a said insertion compartment (6), said first male part (1-1) and second female part (1-2) being in said open and insertion position, one face (20a) of the pod in the convex periphery (24) of the pastille-shaped solid portion (21) of said pod bearing upon the lower portion of the front face (4a) of said third part, the other face (20a) of the pod in the convex periphery (24) of the pastille-shaped solid portion (21) of said pod bearing against a lower portion of the front face of the first male part, said flange (22) of the pod being inserted into a space forming a slot (8) between the lower portion (4-1) of the front face of said third part and the lower portion of the front face (2) of said first male part when said pod is inserted into said insertion compartment, and then
2- relative translation is performed for bringing closer both said first male part (1-1) and second female part (1-2) and rotation and then translation of said third part, from said insertion position to as far as a said sealed closing position in which the orifice of said third part in said vertical position is crossed by at least said first part (1-1), and preferably crossed by said pastille-shaped solid portion (21) of said pod and by said first part (1-1) and said pod (20) is flattened and compressed in a said sealed extraction chamber between the front face (2) of the first male part (1-1) and the bottom of said chamber, and then
3- injection of liquid through said pod and discharge of said liquid from said extraction chamber are carried out, and
4- a relative translation is performed for moving away both said first male parts (1-1) and second female part (1-2) from said closing position to as far as a said open and discharge position, said third part in a vertical position being moved in translation towards the front aperture (5-1) of the chamber, and then in rotation into said tilted position (α), said pod (20) being moved from the bottom of said chamber towards the front aperture of said chamber into a said discharge compartment (7) in which the pod is discharged by gravity.
